# EUROPEAN PATENT SPECIFICATION

(11) **EP 3 964 436 B1**
(45) Date of publication and mention of the grant of the patent: **26.04.2023**
(21) Application number: 21194523.3
(22) Date of filing: 02.09.2021
(51) Int. Cl.: B62J 17/10, B62K 21/02, B62K 25/08, B62J 23/00

(54) **STRADDLED VEHICLE**
GRÄTSCHSITZFAHRZEUG
VÉHICULE À ENFOURCHER

(30) Priority: 03.09.2020 JP 2020148056
(43) Date of publication of application: 09.03.2022
(73) Proprietor: Yamaha Hatsudoki Kabushiki Kaisha, Iwata-shi, Shizuoka 438-8501 (JP)
(72) Inventor: Fukuda, Tadashi, Iwata-shi, Shizuoka, 438-8501 (JP)
(74) Representative: Grünecker Patent- und Rechtsanwälte PartG mbB

(56) References cited:
- JP-A- H0 365 483
- JP-A- 2011 047 436
- JP-A- 2014 198 529
- US-A1- 2008 150 314
- US-A1- 2009 051 140
- US-A1- 2015 014 079

## Description

The present invention relates to a straddled vehicle according to the appended claim 1. JP 2011 047436 A discloses a straddled vehicle comprising:a front wheel; a front fork including a left and a right telescopic suspension having left and right lower tubes supported on the front wheel and left and right upper tubes slidable on the left and right lower tubes;a vehicle component arranged rearward of the front fork with regard to a vehicle front-rear direction;a lower cover covering at least a part of the lower tubes; and an upper cover separate from the lower cover and covering at least a part of the upper tubes, wherein:an upper end of the lower cover is located upward relative to a lower end of the upper cover with regard to a vehicle up-down direction;a cross section of the upper cover perpendicular to an axial line of the suspension includes an upper cover front portion located forward relative to the axial line of the suspension and an upper cover rear portion located rearward relative to the axial line of the suspension with regard to the vehicle front-rear direction;a cross section of the lower cover perpendicular to the axial line of the suspension includes a lower cover front portion located forward relative to the axial line of the suspension and a lower cover rear portion located rearward relative to the axial line of the suspension with regard to the vehicle front-rear direction;the upper cover front portion includes a first front edge, a first left edge extending rearward with regard to the vehicle front-rear direction and leftward with regard to a vehicle left-right direction from the first front edge, and a first right edge extending rearward with regard to the vehicle front-rear direction and rightward with regard to the vehicle left-right direction from the first front edge; the lower cover front portion includes a third front edge, a third left edge extending rearward with regard to the vehicle front-rear direction and leftward with regard to the vehicle left-right direction from the third front edge, and a third right edge extending rearward with regard to the vehicle front-rear direction and rightward with regard to the vehicle left-right direction from the third front edge, wherein the lower cover is constituted by left and right lower covers covering at least a part of the left and right lower tubes, respectively, and the upper cover is constituted by left and right upper covers covering at least a part of the left and right upper tubes, respectively, wherein the left upper cover is separate from the left lower cover and the right upper cover is separate from the right lower cover.

A cover (hereinafter referred to as a "front fork cover") has been installed on a front fork in order to prevent, for example, mud from adhering to the front fork and pebbles from hitting the front fork.

As disclosed in JP 08-332982A, a front fork cover is known in the art that is formed so that a part of its cross section is formed in a streamlined shape. The front fork cover is integrated with the number plate and extends downward from the number plate. The front fork cover has a front half portion and a rear half portion, and the cross-sectional shape of the rear half portion is formed in a streamlined shape. Specifically, the cross-sectional shape of the front half portion is formed in a semicircular shape, and the cross-sectional shape of the rear half portion is formed in a rearwardly-elongated shape. As a part of the cross section of the front fork cover is formed in a streamlined shape, the wind generated while the straddled vehicle is running flows smoothly around the front fork cover. This allows the wind to be desirably supplied to the radiator, etc., arranged rearward of the front fork.

The front fork includes a pair of telescopic suspensions, each having an inner tube and an outer tube, on the left and on the right. Since the suspension is an elongated component, the dimension of the suspension in the vehicle up-down direction is large. While the front fork cover disclosed in JP 08-332982A covers an upper portion of the suspension but does not cover a lower portion thereof. Since the front fork cover is integrated with the number plate, it is difficult to extend the front fork cover downward so as to cover the substantial portion of the suspension. Therefore, with the front fork cover described above, it is not possible to cover the substantial portion of the suspension.

With the front fork cover described above, the cross-sectional shape of the rear half portion is a streamlined shape, but the cross-sectional shape of the front half portion is a circular shape and not a streamlined shape. Therefore, in order to further improve the airflow straightening function, one may consider forming the cross-sectional shape of the front half portion in a streamlined shape. That is, one may consider forming both the front half portion and the rear half portion so that the dimension of the cross-sectional shape in the vehicle front-rear direction is larger than a half of the dimension thereof in the vehicle left-right direction.

In such a case, however, the dimension of the front fork cover in the vehicle front-rear direction becomes large, and the front fork cover receives more wind pressure from a diagonal direction. With a straddled vehicle, when the rider steers the handle, the front fork cover rotates, together with the front fork, about the steering shaft. Then, the wind hits the front fork cover from an inclined direction. The wind pressure received by the front fork cover varies depending on the rotation angle of the front fork. Therefore, if the dimension of the front fork cover in the vehicle front-rear direction is excessive, the wind pressure to be received while steering may become substantially not constant, thereby deteriorating the handling comfort.

An object of the present invention is to provide a straddled vehicle, with which it is possible to better prevent mud, pebbles, etc., from hitting the front fork than before, to desirably send wind to vehicle components that are rearward of the front fork, and to maintain the handling comfort. According to the present invention said object is solved by a straddled vehicle having the features of independent claim 1. Preferred embodiments are laid down in the dependent claims.

A straddled vehicle disclosed herein includes: a front wheel; a front fork including a left and a right telescopic suspension each having a lower tube supported on the front wheel and an upper tube slidable on the lower tube; a vehicle component arranged rearward of the front fork; a lower cover covering at least a part of the lower tube; and an upper cover separate from the lower cover and covering at least a part of the upper tube. An upper end of the lower cover is located upward relative to a lower end of the upper cover. A cross section of the upper cover perpendicular to an axial line of the suspension includes an upper cover front portion located forward relative to the axial line of the suspension and an upper cover rear portion located rearward relative to the axial line of the suspension. A cross section of the lower cover perpendicular to the axial line of the suspension includes a lower cover front portion located forward relative to the axial line of the suspension and a lower cover rear portion located rearward relative to the axial line of the suspension. The upper cover front portion includes a first front edge, a first left edge extending rearward and leftward from the first front edge, and a first right edge extending rearward and rightward from the first front edge. A dimension of the upper cover front portion in a vehicle front-rear direction is larger than a half of a dimension of the upper cover front portion in a vehicle left-right direction. The upper cover rear portion has a shape of which a rear side is open. A dimension of the upper cover rear portion in the vehicle front-rear direction is smaller than the dimension of the upper cover front portion in the vehicle front-rear direction. The lower cover front portion includes a third front edge, a third left edge extending rearward and leftward from the third front edge, and a third right edge extending rearward and rightward from the third front edge. A dimension of the lower cover front portion in the vehicle front-rear direction is larger than a half of a dimension of the lower cover front portion in the vehicle left-right direction. The lower cover rear portion has a shape of which a rear side is open. A dimension of the lower cover rear portion in the vehicle front-rear direction is smaller than the dimension of the lower cover front portion in the vehicle front-rear direction.

The straddled vehicle includes an upper cover and a lower cover covering the suspension of the front fork, and the upper cover and the lower cover are separate parts. With the upper cover and the lower cover, it is possible to cover a large portion of the suspension. Therefore, it is possible to better prevent mud, pebbles, etc., from hitting the suspension than before. The cross sections of the upper cover and the lower cover perpendicular to the axial line of the suspension are not circular, but are each formed in a shape that is obtained by cutting off a portion of a streamlined shape at a position rearward relative to the axial line of the suspension. The upper cover and the lower cover each have a shape that conforms to a streamlined shape and extend to a position rearward relative to the axial line of the suspension. Therefore, the upper cover and the lower cover can sufficiently straighten the airflow from the front side. Thus, a sufficiently straightened air is supplied to vehicle components that are rearward of the front fork. It is possible to desirably send wind to vehicle components that are rearward of the front fork. Since the cross section of each of the upper cover and the lower cover is formed in a shape that is obtained by cutting off a rear portion of a streamlined shape, the dimension thereof in the vehicle front-rear direction is smaller than that when the entirety thereof is formed in a streamlined shape. Therefore, as compared with a case where the entirety of the cross section of each of the upper cover and the lower cover is formed in a streamlined shape, the wind pressure to be received by the upper cover and the lower cover from the side is small. This suppresses the change in the wind pressure received by the upper cover and the lower cover while the front fork rotates leftward or rightward. Thus, the handling comfort is ensured. Therefore, with the straddled vehicle set forth above, it is possible to better prevent mud, pebbles, etc., from hitting the front fork than before, to desirably send wind to vehicle components that are rearward of the front fork, and to maintain the handling comfort.

The upper cover rear portion may include a second left edge extending rearward and rightward, and a second right edge located rightward of the second left edge and extending rearward and leftward.

The lower cover rear portion may include an edge extending rearward and inward in the vehicle width direction from a position that is outward in a vehicle width direction relative to the lower tube.

The lower cover rear portion may include another edge extending rearward and outward in the vehicle width direction from a position that is inward in the vehicle width direction relative to the lower tube.

According to a preferred embodiment, the straddled vehicle includes a front fender including a horizontal portion arranged upward of the front wheel, and a vertical portion that extends downward from the horizontal portion and is arranged sideward of the front wheel. The lower cover is arranged rearward of the vertical portion of the front fender. A cross section of the vertical portion of the front fender perpendicular to the axial line of the suspension includes a fourth front edge, a fourth left edge extending rearward and leftward from the fourth front edge and a fourth right edge extending rearward and rightward from the fourth front edge, wherein a dimension of the vertical portion in the vehicle front-rear direction is larger than a half of a dimension thereof in the vehicle left-right direction.

According to the embodiment set forth above, with the front fender, it is possible to prevent mud from being rolled up from the front wheel, and it is possible to improve the air guide function for components that are rearward of the front fork.

According to a preferred embodiment, the straddled vehicle includes a front fender that is arranged upward of the front wheel and integrated with a left lower cover and a right lower cover.

According to the embodiment set forth above, since the lower cover serve also as the vertical portion of the front fender, it is possible to reduce the number of components.

According to a preferred embodiment, an upper end of the lower cover is located upward relative to an upper end of the lower tube. A lower end of the lower cover is located downward relative to a middle position of the lower tube in a vehicle up-down direction.

According to the embodiment set forth above, the lower cover covers a half or more of the lower tube. Therefore, for a large portion of the lower tube, it is possible to prevent mud, pebbles, etc., from hitting the lower tube.

According to a preferred embodiment, the front wheel includes a rim and a tire attached to the rim. The upper end of the lower cover is located upward relative to the rim as the vehicle is viewed from the side.

According to the embodiment set forth above, the lower cover extends to a relatively high position. Therefore, it is possible to effectively prevent mud, pebbles, etc., from hitting the suspension.

According to a preferred embodiment, an upper end of the tire is located downward relative to an upper end of the vehicle component and upward relative to a lower end of the vehicle component. A portion of the upper cover, a portion of the lower cover and a portion of the tire overlap with each other as the vehicle is viewed from the side.

According to the embodiment set forth above, it is possible to desirably send wind to vehicle components even if the suspension extends/contracts while the straddled vehicle is running.

The suspension may be an inverted suspension. That is, the upper tube may be a cylindrical outer tube; and the lower tube may be an inner tube slidably inserted into the outer tube.

According to a preferred embodiment, a lower end portion of the upper cover is arranged on an inner side of an upper end portion of the lower cover.

According to the embodiment set forth above, when muddy water is rolled up from the road surface to adhere to the lower cover, the muddy water is likely to move along the surface of the lower cover and reach the upper end portion of the lower cover to be then scattered rearward by the wind. Therefore, it is possible to suppress adhesion of muddy water to the suspension.

According to a preferred embodiment, the straddled vehicle includes: an under bracket secured to the upper tube of the left suspension and the upper tube of the right suspension; and an inner fender secured to the under bracket. The upper cover is supported on the inner fender; and the lower cover is supported on the lower tube.

According to the embodiment set forth above, the upper cover and the lower cover are desirably supported.

According to a preferred embodiment, the inner fender includes a horizontal plate-shaped air guide portion arranged downward of the under bracket. The upper cover extends downward from the air guide portion.

According to the embodiment set forth above, the air guide portion of the inner fender and the left and right upper covers together form a gate-shaped air guide path for guiding airflow rearward. With the air guide path, it is possible to more desirably send wind to components that are rearward of the front fork.

According to a preferred embodiment, the straddled vehicle includes a cowling at least a part of which is arranged outward in a vehicle width direction relative to the upper cover. A portion of the upper cover and a portion of the cowling overlap with each other as the vehicle is viewed from the side.

According to the embodiment set forth above, with the upper cover and the cowling, it is possible to desirably straighten the airflow from the front side. It is possible to more desirably send wind to vehicle components that are rearward of the front fork.

According to a preferred embodiment, in a predetermined horizontal cross section that passes through the upper cover, a front end of the upper cover is located forward relative to a front end of the cowling.

According to the embodiment set forth above, the airflow is guided into between the upper cover and the cowling after being straightened by at least a part of the upper cover. It is possible to more desirably send wind to vehicle components that are rearward of the front fork.

In a predetermined horizontal cross section that passes through the upper cover, a front end of the upper cover may be located forward relative to a front end of the cowling, and a rear end of the upper cover may be located rearward relative to the front end of the cowling.

The dimension of the upper cover front portion in the vehicle front-rear direction may be equal to or greater than the dimension of the upper cover front portion in the vehicle left-right direction. The dimension of the lower cover front portion in the vehicle front-rear direction may be equal to or greater than the dimension of the lower cover front portion in the vehicle left-right direction.

The dimension of the upper cover rear portion in the vehicle front-rear direction may be 1/4 to 3/4 times a dimension of the upper cover rear portion in the vehicle left-right direction. The dimension of the lower cover rear portion in the vehicle front-rear direction may be 1/4 to 3/4 times a dimension of the lower cover rear portion in the vehicle left-right direction.

A radiator or an oil cooler is an example of the vehicle component. Other components can be taken into consideration.

### Advantageous Effects Of Invention

According to the present invention, it is possible to provide a straddled vehicle, with which it is possible to better prevent mud, pebbles, etc., from hitting the front fork than before, to desirably send wind to vehicle components that are rearward of the front fork, and to maintain the handling comfort.

### BRIEF DESCRIPTION OF THE DRAWINGS

FIG. 1 is a side view showing a front portion of a motorcycle according to an embodiment.
FIG. 2 is a perspective view showing a front wheel, etc., of the motorcycle as viewed from a left and forward diagonal direction.
FIG. 3 is a perspective view showing the front wheel, etc., of the motorcycle as viewed from a left diagonal direction.
FIG. 4 is a cross-sectional view taken along line IV-IV of FIG. 1, showing a left suspension, an upper cover, etc.
FIG. 5 is a cross-sectional view taken along line V-V of FIG. 1, showing the left suspension, the upper cover, a lower cover, etc.
FIG. 6 is a cross-sectional view taken along line V-V of FIG. 1, showing the left suspension, the lower cover, a front fender, etc.
FIG. 7a is a side view showing the suspension and the lower cover. FIG. 7b is a side view showing the suspension and the upper cover. FIG. 7c is a side view showing the suspension, the front fender and the upper cover.
FIG. 8 is a cross-sectional view taken along line VIII-VIII of FIG. 1, showing the upper cover, a cowling, etc.
FIG. 9a is a view schematically showing the air flow forward of a radiator in the absence of an upper cover. FIG. 9b is a view schematically showing the air flow forward of the radiator in the presence of an upper cover according to an embodiment. FIG. 9c is a view schematically showing the air flow forward of the radiator in the presence of an upper cover of a streamlined shape.
FIG. 10a is a view schematically showing the air flow when the front fork is facing forward in the presence of an upper cover of a streamlined shape. FIG. 10b is a view schematically showing the air flow when the front fork rotates rightward in the presence of an upper cover of a streamlined shape.
FIG. 11a is a view schematically showing the air flow when the front fork is facing forward in the presence of an upper cover according to an embodiment. FIG. 11b is a view schematically showing the air flow when the front fork rotates rightward in the presence of an upper cover according to an embodiment.
FIG. 12 is a view corresponding to FIG. 5 according to another embodiment.
FIG. 13 is a view corresponding to FIG. 4 showing a left suspension and an upper cover according to another embodiment.

### DETAILED DESCRIPTION OF THE PREFERRED EMBODIMENTS

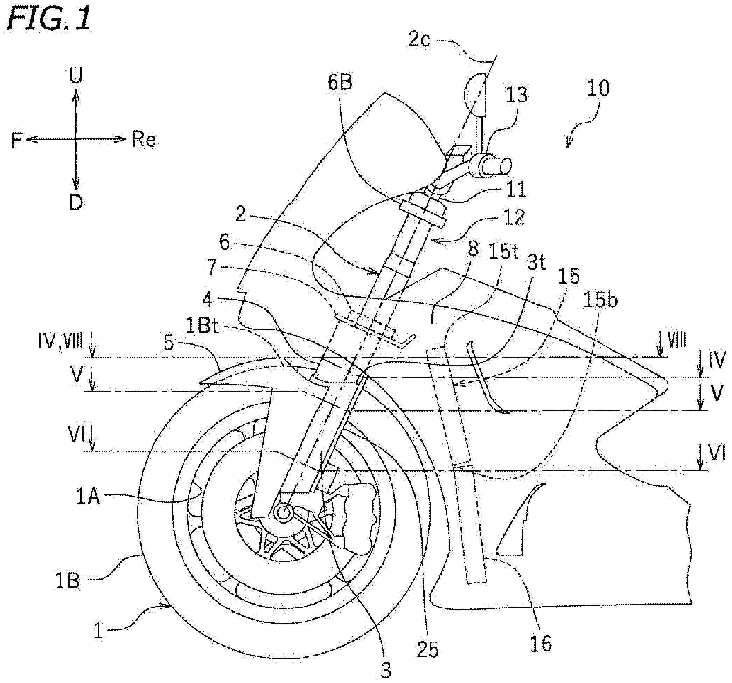

An embodiment of the present teaching will now be described with reference to the drawings. A motorcycle will now be described as an example of a straddled vehicle. Note that a straddled vehicle refers to a vehicle that is straddled by the rider. FIG. 1 is a left side view showing a front portion of a motorcycle 10 according to the present embodiment.

The designations F, Re, L, R, U and D, as used in the figures, refer to front, rear, left, right, up and down, respectively. The terms front, rear, left, right, up and down, as used in the description below, refer to these directions as seen from the rider seated in the seat (not shown) while the motorcycle 10 is stationary standing upright on a horizontal surface with no rider and no load thereon, unless specified otherwise.

The motorcycle 10 includes a front wheel 1, a front fork 12 supported on the front wheel 1, a steering shaft 11 supported on the front fork 12, and a handle 13 secured to the steering shaft 11. A cowling 8 is arranged forward and sideward of the front fork 12. A radiator 15 and an oil cooler 16 are arranged rearward of the front fork 12. The radiator 15 and the oil cooler 16 are examples of vehicle components arranged rearward of the front fork 12. The oil cooler 16 is arranged downward of the radiator 15.

Although not shown in the figures, the motorcycle 10 includes a head pipe, a body frame extending rearward from the head pipe, an internal combustion engine supported on the body frame, a seat supported on the body frame, a rear arm pivotally supported on the body frame, and a rear wheel supported on the rear arm. The steering shaft 11 is inserted through the head pipe. The steering shaft 11 is rotatably supported on the head pipe. The seat is arranged rearward of the head pipe. The head pipe is arranged upward of the internal combustion engine.

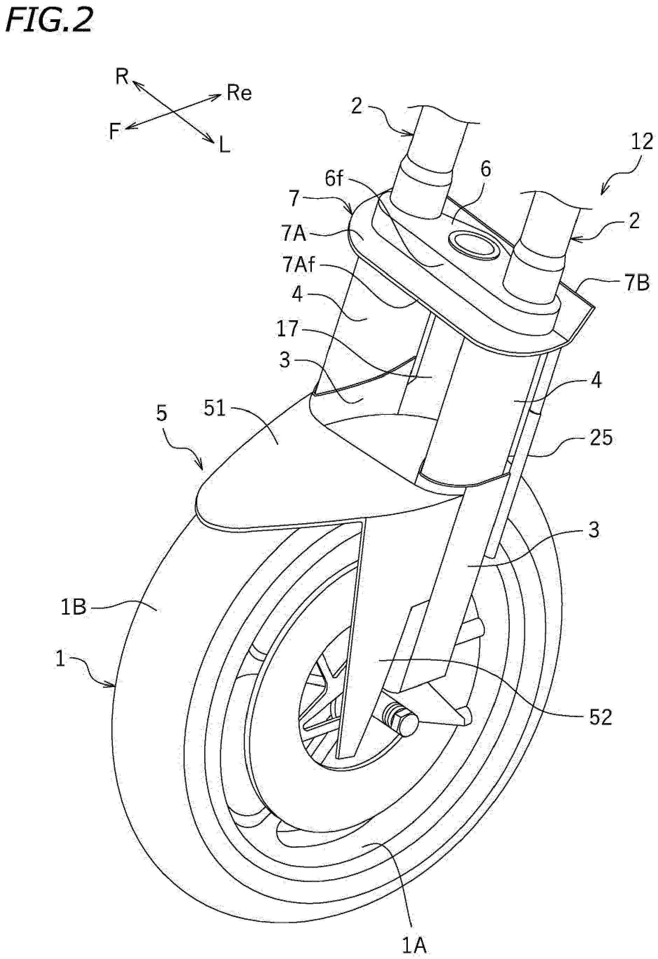

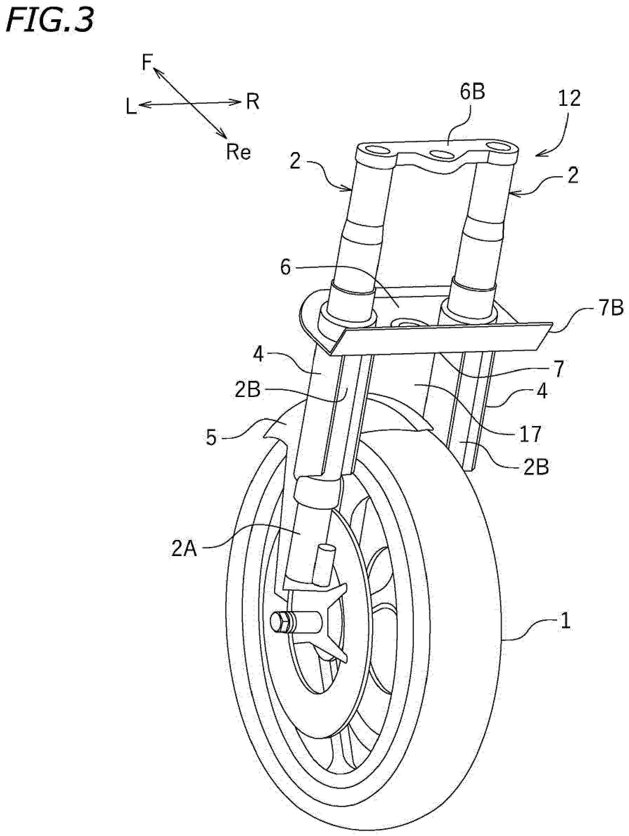

The front fork 12 includes a left and a right telescopic suspension 2. FIG. 2 is a perspective view showing the front wheel 1, etc., as viewed from a left and forward diagonal direction. FIG. 3 is a perspective view showing the front wheel 1, etc., as viewed from a left and rearward diagonal direction. As shown in FIG. 3, an under bracket 6 and an upper bracket 6B arranged upward relative to the under bracket 6 are secured to the left suspension 2 and to the right suspension 2. The under bracket 6 and the upper bracket 6B bridge between the left and right suspensions 2. In FIG. 2, reference sign 25 denotes a stroke sensor for detecting the amount of extension/contraction of the suspension 2. Note that in FIG. 3, the stroke sensor 25 is not shown.

As shown in FIG. 2, a front fender 5 is arranged forward of the front fork 12. The front fender 5 includes a horizontal portion 51 arranged upward of the front wheel 1, a vertical portion 52 that extends downward from the left end of the horizontal portion 51 and is arranged on the left side of the front wheel 1, and a vertical portion 52 that extends downward from the right end of the horizontal portion 51 and is arranged on the right side of the front wheel 1.

As shown in FIG. 3, each suspension 2 includes an outer tube 2B, and an inner tube 2A slidably inserted into the outer tube 2B. In the present embodiment, the front fork 12 is a so-called inverted front fork, with the inner tube 2A arranged downward and the outer tube 2B arranged upward. The inner tube 2A and the outer tube 2B are an example of the "lower tube" and an example of the "upper tube", respectively.

As shown in FIG. 2, the motorcycle 10 includes left and right lower covers 3 covering at least a part of the left and right inner tubes 2A, and left and right upper covers 4 covering at least a part of the left and right outer tubes 2B. Note that in FIG. 3, the left and right lower covers 3 are not shown. The left upper cover 4 is separate from the left lower cover 3. The right upper cover 4 is separate from the right lower cover 3. The left upper cover 4 and the left lower cover 3 have a left-right symmetrical configuration with the right upper cover 4 and the right lower cover 3, respectively. In the description below, the configuration of the left upper cover 4 and the configuration of the left lower cover 3 will be described, while omitting the description of the configuration of the right upper cover 4 and the configuration of the right lower cover 3.

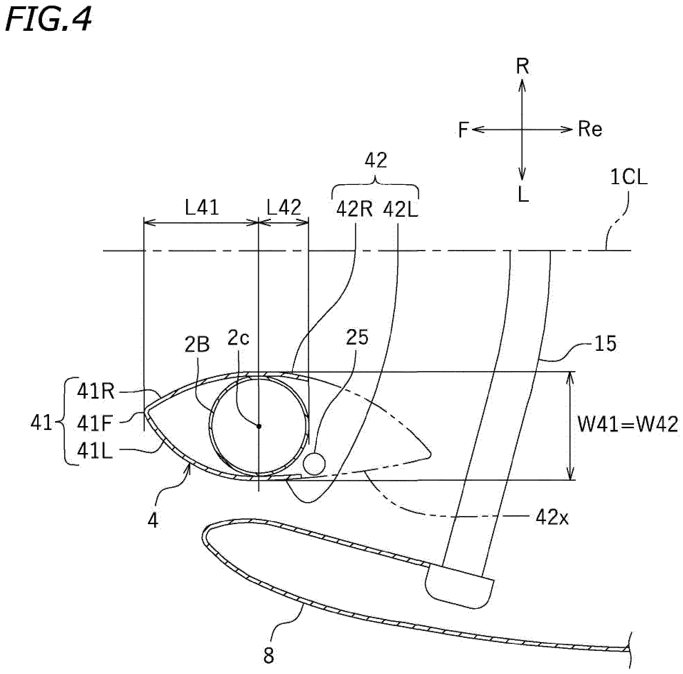

The upper cover 4 is formed in a streamlined shape of which the front side is closed and the rear side is open facing rearward. FIG. 4 is a cross-sectional view taken along line IV-IV of FIG. 1, showing the suspension 2 and the upper cover 4. The cross section of the suspension 2 and the upper cover 4 shown in FIG. 4 is a cross section perpendicular to the axial line 2c of the suspension 2. Note that the axial line 2c of the suspension 2 refers to the axial line of the inner tube 2A and the outer tube 2B. As shown in FIG. 4, the cross section of the upper cover 4 perpendicular to the axial line 2c of the suspension 2 includes an upper cover front portion 41 located forward relative to the axial line 2c of the suspension 2, and an upper cover rear portion 42 located rearward relative to the axial line 2c of the suspension 2.

The upper cover front portion 41 is formed in a streamlined shape with its dimension in the vehicle left-right direction gradually decreasing toward the front side. The upper cover front portion 41 is formed with the front side closed. Specifically, the upper cover front portion 41 includes a first front edge 41F, a first left edge 41L extending rearward and leftward from the first front edge 41F, and a first right edge 41R extending rearward and rightward from the first front edge 41F.

The upper cover front portion 41 is formed in a streamlined shape, and it is more elongated in the forward direction than a semicircular shape. The dimension L41 of the upper cover front portion 41 in the vehicle front-rear direction is larger than a half of the dimension W41 of the upper cover front portion 41 in the vehicle left-right direction. L41>0.5×W41. The dimension L41 of the upper cover front portion 41 in the vehicle front-rear direction is larger than the dimension W41 of the upper cover front portion 41 in the vehicle left-right direction. L41 >W41.

The upper cover rear portion 42 is formed so that its dimension in the vehicle left-right direction gradually decreases toward the rear side. The upper cover rear portion 42 is shaped with an opening toward the rear side. The upper cover rear portion 42 is formed in a shape that is obtained by cutting off a rear portion of the streamlined shape denoted by the virtual line 42x. The upper cover rear portion 42 has a shape that conforms to the streamlined shape. Specifically, the upper cover rear portion 42 includes a second left edge 42L and a second right edge 42R. The second left edge 42L extends rearward and rightward from the first left edge 41L. The second right edge 42R extends rearward and leftward from the first right edge 41R. Where the direction away from the center line 1CL of the front wheel 1 is defined as "outward in the vehicle width direction" and the direction toward the center line 1CL of the front wheel 1 is defined as "inward in the vehicle width direction", the second left edge 42L extends rearward and inward in the vehicle width direction from a position that is outward in the vehicle width direction relative to the outer tube 2B. The second right edge 42R extends rearward and outward in the vehicle width direction from a position that is inward in the vehicle width direction relative to the outer tube 2B.

The dimension L42 of the upper cover rear portion 42 in the vehicle front-rear direction is smaller than the dimension L41 of the upper cover front portion 41 in the vehicle front-rear direction. L41 >L42. Note that the dimension of the second left edge 42L in the vehicle front-rear direction and the dimension of the second right edge 42R in the vehicle front-rear direction may be equal to or different from each other. Here, the dimension of the second right edge 42R in the vehicle front-rear direction is larger than the dimension of the second left edge 42L in the vehicle front-rear direction. The dimension L42 of the upper cover rear portion 42 in the vehicle front-rear direction is 1/4 to 3/4 times the dimension W42 of the upper cover rear portion 42 in the vehicle left-right direction. Note however that the relationship between L42 and W42 is merely an example, and there is no limitation thereto. Note that since the rear end of the upper cover front portion 41 and the front end of the upper cover rear portion 42 are continuous with each other, the dimension W41 of the upper cover front portion 41 in the vehicle left-right direction and the dimension W42 of the upper cover rear portion 42 in the vehicle left-right direction are equal to each other. W41=W42.

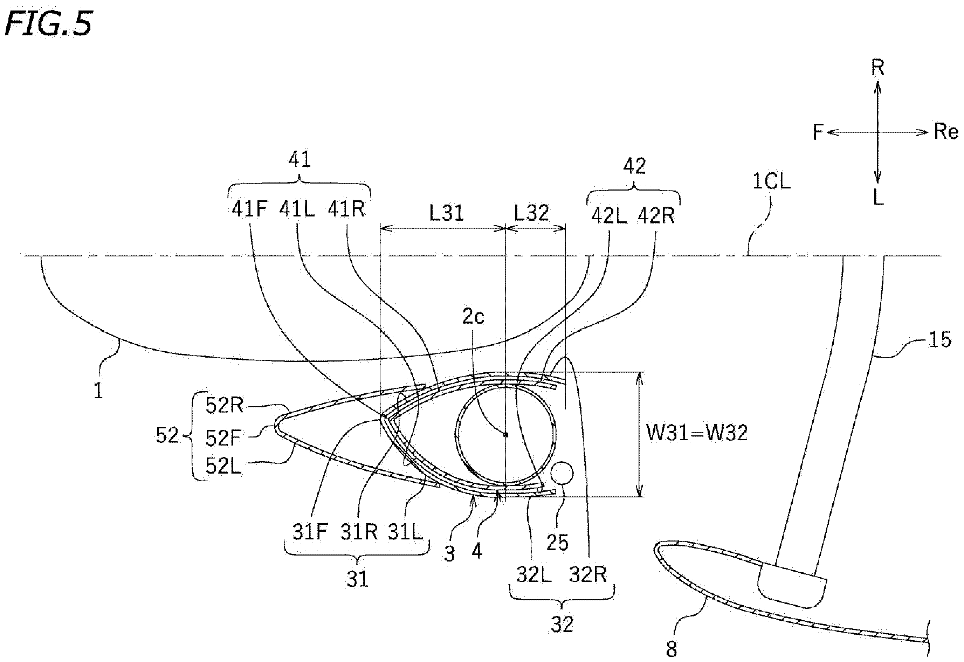

As is the upper cover 4, the lower cover 3 is formed in a streamlined shape of which the front side is closed and the rear side is open facing rearward. FIG. 5 is a cross-sectional view taken along line V-V of FIG. 1, showing the suspension 2, the upper cover 4 and the lower cover 3. The cross section of the suspension 2, the upper cover 4 and the lower cover 3 shown in FIG. 5 is a cross section perpendicular to the axial line 2c of the suspension 2. In the cross section shown in FIG. 5, the lower cover 3 has a shape similar to the upper cover 4. Note however that in the cross section, the lower cover 3 is slightly larger than the upper cover 4. In the cross section, the upper cover 4 is arranged on the inner side of the lower cover 3. The cross section of the lower cover 3 perpendicular to the axial line 2c of the suspension 2 includes a lower cover front portion 31 that is located forward relative to the axial line 2c of the suspension 2, and a lower cover rear portion 32 that is located rearward relative to the axial line 2c of the suspension 2.

The lower cover front portion 31 is formed in a streamlined shape with its dimension in the vehicle left-right direction gradually decreasing toward the front side. The lower cover front portion 31 is formed with the front side closed. Specifically, the lower cover front portion 31 includes a third front edge 31F, a third left edge 31L extending rearward and leftward from the third front edge 31F, and a third right edge 31R extending rearward and rightward from the third front edge 31F.

The lower cover front portion 31 is formed in a streamlined shape, and it is more elongated in the forward direction than a semicircular shape. The dimension L31 of the lower cover front portion 31 in the vehicle front-rear direction is larger than a half of the dimension W31 of the lower cover front portion 31 in the vehicle left-right direction. L31>0.5×W31. Here, the dimension L31 of the lower cover front portion 31 in the vehicle front-rear direction is larger than the dimension W31 of the lower cover front portion 31 in the vehicle left-right direction. L31 >W31.

The lower cover rear portion 32 is formed so that its dimension in the vehicle left-right direction gradually decreases toward the rear side. The lower cover rear portion 32 is shaped with an opening toward the rear side. The lower cover rear portion 32 is formed in a shape that is obtained by cutting off a rear portion of the streamlined shape. The lower cover rear portion 32 has a shape that conforms to the streamlined shape. Specifically, the lower cover rear portion 32 includes a left edge 32L and a right edge 32R. The left edge 32L extends rearward and rightward from the third left edge 31L. The right edge 32R extends rearward and leftward from the third right edge 31R. The left edge 32L extends rearward and inward in the vehicle width direction from a position that is outward in the vehicle width direction relative to the outer tube 2B. The right edge 32R extends rearward and outward in the vehicle width direction from a position that is inward in the vehicle width direction relative to the outer tube 2B.

The dimension L32 of the lower cover rear portion 32 in the vehicle front-rear direction is smaller than the dimension L31 of the lower cover front portion 31 in the vehicle front-rear direction. L31>L32. The dimension of the left edge 32L in the vehicle front-rear direction and the dimension of the right edge 32R in the vehicle front-rear direction may be equal to or different from each other. In the cross section shown in FIG. 5, the dimension of the right edge 32R in the vehicle front-rear direction is larger than the dimension of the left edge 32L in the vehicle front-rear direction. The dimension L32 of the lower cover rear portion 32 in the vehicle front-rear direction is 1/4 to 3/4 times the dimension W32 of the lower cover rear portion 32 in the vehicle left-right direction. Note however that the relationship between L32 and W32 is merely an example, and there is no limitation thereto. Note that since the rear end of the lower cover front portion 31 and the front end of the lower cover rear portion 32 are continuous with each other, the dimension W31 of the lower cover front portion 31 in the vehicle left-right direction and the dimension W32 of the lower cover rear portion 32 in the vehicle left-right direction are equal to each other. W31=W32.

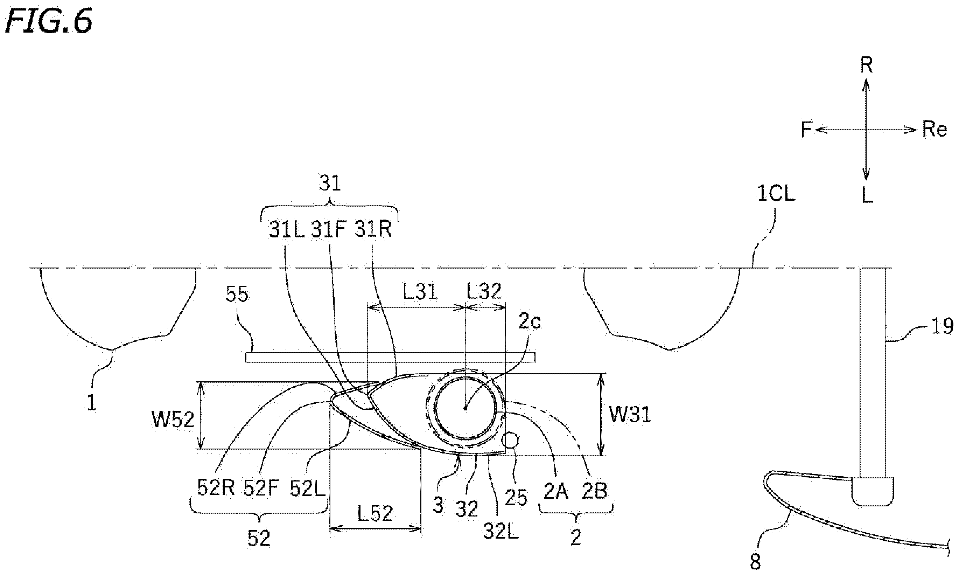

FIG. 6 is a cross-sectional view taken along line VI-VI of FIG. 1, showing the suspension 2, the lower cover 3, the front fender 5, etc. The cross section of the suspension 2, the lower cover 3 and the front fender 5 shown in FIG. 6 is a cross section perpendicular to the axial line 2c of the suspension 2. The lower cover 3 is arranged rearward of the vertical portion 52 of the front fender 5.

The cross-sectional shape of the lower cover 3 shown in FIG. 6 is different from the cross-sectional shape of the lower cover 3 shown in FIG. 5. In the cross section of the lower cover 3 shown in FIG. 6, the rear end of the third right edge 31R of the lower cover front portion 31 is located forward relative to the axial line 2c of the suspension 2. The lower cover rear portion 32 does not have the right edge 32R. Reference sign 55 denotes a brake disc. In the cross section shown in FIG. 6, the right edge 32R of the lower cover rear portion 32 is omitted so that the brake disc 55 does not interfere with the lower cover 3. Note however that the lower cover rear portion 32 may have the right edge 32R as long as it does not interfere with the brake disc 55.

The cross section of the vertical portion 52 of the front fender 5 perpendicular to the axial line 2c of the suspension 2 is formed so that its dimension in the vehicle left-right direction gradually decreases toward the front side, and is formed in a shape that is obtained by cutting off a rear portion of a streamlined shape. The cross section of the vertical portion 52 of the front fender 5 perpendicular to the axial line 2c of the suspension 2 includes a fourth front edge 52F, a fourth left edge 52L extending rearward and leftward from the fourth front edge 52F, and a fourth right edge 52R extending rearward and rightward from the fourth front edge 52F. The dimension L52 of the vertical portion 52 in the vehicle front-rear direction is larger than a half of the dimension W52 of the vertical portion 52 in the vehicle left-right direction. L52>0.5×W52.

Although not shown in the figures, the right vertical portion 52 of the front fender 5 is formed in a shape that is in left-right symmetry with the left vertical portion 52 described above.

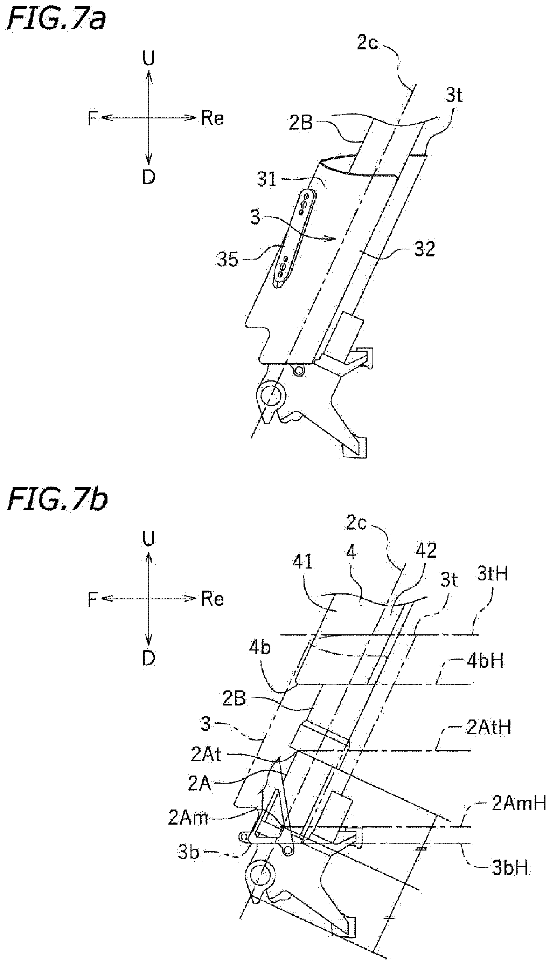

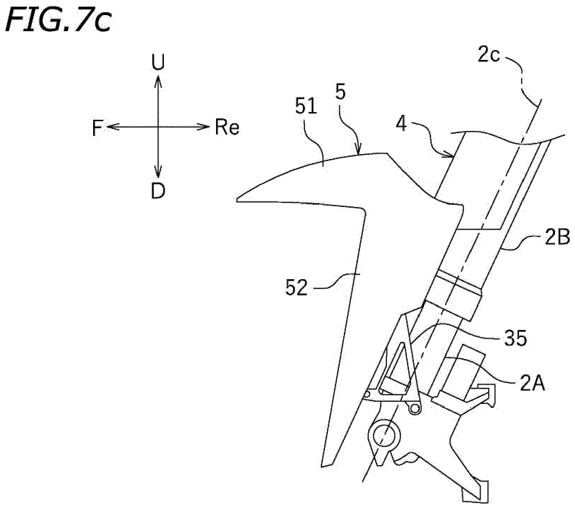

FIG. 7a is a side view showing the suspension 2 and the lower cover 3. FIG. 7b is a side view showing the suspension 2 and the upper cover 4. FIG. 7c is a side view showing the suspension 2, the front fender 5 and the upper cover 4.

Reference sign 3tH denotes a horizontal line that passes through an upper end 3t of the lower cover 3. Reference sign 4bH denotes a horizontal line that passes through a lower end 4b of the upper cover 4. As shown in FIG. 7b, the upper end 3t of the lower cover 3 is located upward relative to a lower end 4b of the upper cover 4. The upper end portion of the lower cover 3 and the lower end portion of the upper cover 4 overlap with each other as viewed from the side. The lower end portion of the upper cover 4 is inserted on the inner side of the upper end portion of the lower cover 3.

Reference sign 2AtH denotes a horizontal line that passes through an upper end 2At of the inner tube 2A. Note that the upper end 2At of the inner tube 2A refers to the upper end of a portion of the inner tube 2A that protrudes from the outer tube 2B when the motorcycle 10 is stationary standing upright on a horizontal surface with no rider and no load thereon. Since the upper end portion of the inner tube 2A is inserted into the outer tube 2B, the inner tube 2A includes a portion that is located upward relative to the upper end 2At. However, the upper end 2At described above is herein defined as the upper end of the inner tube 2A. As shown in FIG. 7b, the upper end 3t of the lower cover 3 is located upward relative to the upper end 2At of the inner tube 2A.

Reference sign 2AmH denotes a horizontal line that passes through a middle position 2Am of the inner tube 2A in the vehicle up-down direction. Note that the middle position 2Am of the inner tube 2A in the vehicle up-down direction refers to the middle position in the vehicle up-down direction along a portion of the inner tube 2A that protrudes from the outer tube 2B when the motorcycle 10 is stationary standing upright on a horizontal surface with no rider and no load thereon. Reference sign 3bH denotes a horizontal line that passes through a lower end 3b of the lower cover 3. As shown in FIG. 7b, the lower end 3b of the lower cover 3 is located downward relative to the middle position 2Am of the inner tube 2A in the vehicle up-down direction.

As shown in FIG. 1, the front wheel 1 includes a rim 1A and a tire 1B attached to the rim 1A. An upper end 1Bt of the tire 1B is located downward relative to an upper end 15t of the radiator 15 and upward relative to a lower end 15b of the radiator 15. As the vehicle is viewed from the side, the upper end 3t of the lower cover 3 is located upward relative to the rim 1A. As the vehicle is viewed from the side, a portion of the upper cover 4, a portion of the lower cover 3 and a portion of the tire 1B overlap with each other.

As shown in FIG. 2 and FIG. 3, an inner fender 7 is secured to the under bracket 6. The inner fender 7 includes a horizontal plate-shaped air guide portion 7A, and an air guide portion 7B extending rearward and upward from the rear end of the air guide portion 7A. A front end 7Af of the air guide portion 7A is located forward relative to a front end 6f of the under bracket 6.

The upper cover 4 is supported on the inner fender 7. The upper cover 4 is supported on the outer tube 2B of the suspension 2 via the inner fender 7 and the under bracket 6. The lower cover 3 is supported on the inner tube 2A of the suspension 2 via a bracket 35 (see FIG. 7a and FIG. 7b). The upper cover 4 is supported on the outer tube 2B and is not supported on the inner tube 2A. The lower cover 3 is supported on the inner tube 2A and is not supported on the outer tube 2B. Therefore, when the inner tube 2A slides against the outer tube 2B, no external force is applied to the upper cover 4 and the lower cover 3.

As shown in FIG. 2, the upper cover 4 extends downward from the air guide portion 7A. The left and right upper covers 4 and the air guide portion 7A together define a gate-shaped air guide path 17.

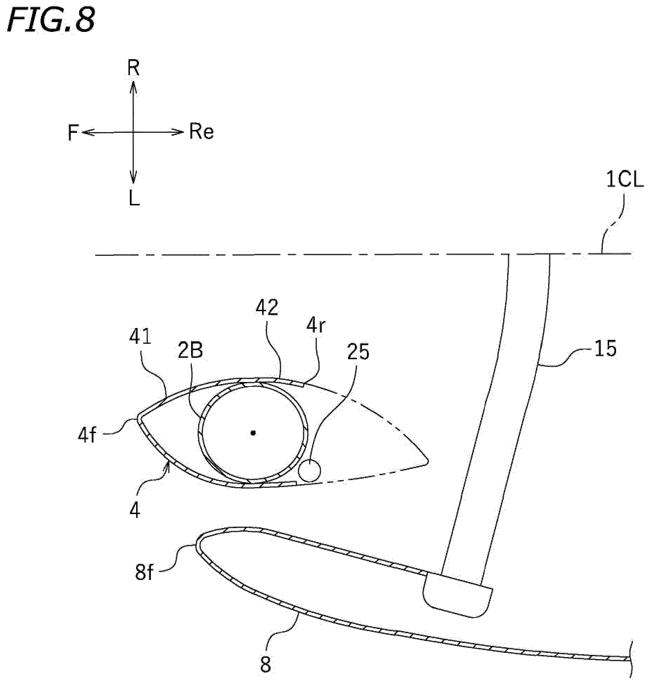

As shown in FIG. 1, at least a part of the cowling 8 is arranged outward in the vehicle width direction relative to the upper cover 4. A left portion of the cowling 8 is arranged leftward relative to the upper cover 4. As the vehicle is viewed from the side, a portion of the upper cover 4 and a portion of the cowling 8 overlap with each other. FIG. 8 is a cross-sectional view taken along line VIII-VIII of FIG. 1, for the upper cover 4, the cowling 8, etc. FIG. 8 shows a horizontal cross section that passes through the middle position of the upper cover 4 in the vehicle up-down direction. In the horizontal cross section, a front end 4f of the upper cover 4 is located forward relative to a front end 8f of the cowling 8. In the horizontal cross section, a rear end 4r of the upper cover 4 is located rearward relative to a front end 8f of the cowling 8.

As shown in FIG. 1, the radiator 15 is arranged rearward of the front fender 5, the upper cover 4 and the lower cover 3. The oil cooler 16 is arranged rearward of the front fender 5, the upper cover 4 and the lower cover 3.

As the motorcycle 10 runs, the wind flows from the front side against the motorcycle 10. The radiator 15 and the oil cooler 16 are cooled by the wind from the front side. In order to desirably cool the radiator 15 and the oil cooler 16, it is preferred to supply a wind that is straightened as much as possible to the radiator 15 and the oil cooler 16. However, as shown in FIG. 1, the radiator 15 and the oil cooler 16 are arranged rearward of the front fork 12. If the wind is disturbed while flowing around the front fork 12, it will deteriorate the function of cooling the radiator 15 and the oil cooler 16.

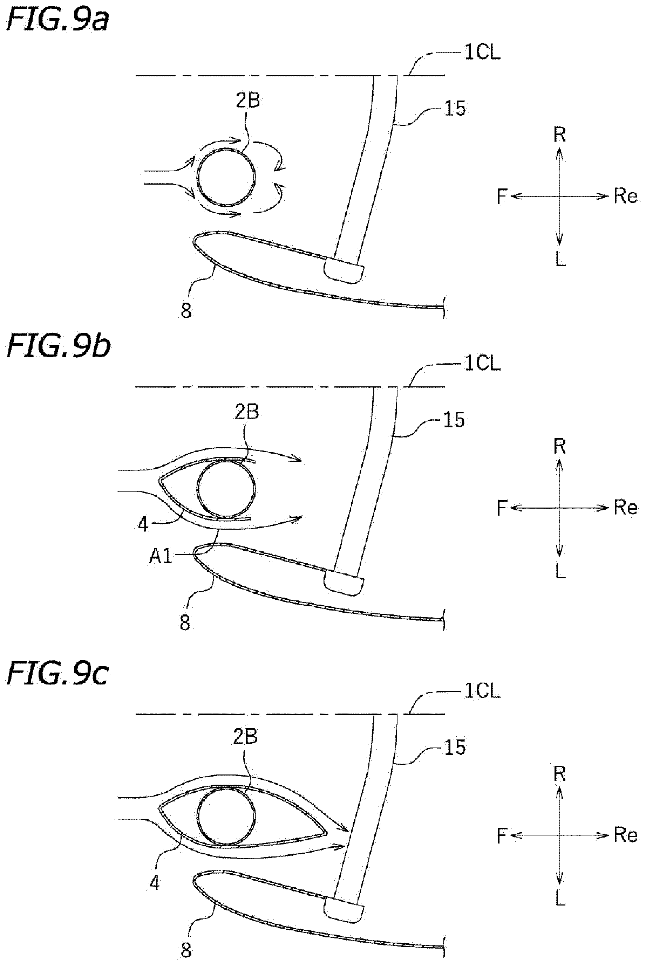

Now, the cross-sectional contours of the outer tube 2B and the inner tube 2A of the front fork 12 are circular. For example, as shown in FIG. 9a, in the absence of the upper cover 4, many vortices are formed rearward of the outer tube 2B. Thus, a disturbed airflow is supplied to the radiator 15, thereby deteriorating the cooling function of the radiator 15.

On the other hand, in the present embodiment, the upper cover 4 having a shape that is obtained by cutting off a rear portion of a streamlined shape is provided as shown in FIG. 9b. This suppresses the disturbance of the airflow. A relatively straightened airflow is supplied to the radiator 15. This suppresses the deterioration of the cooling function of the radiator 15.

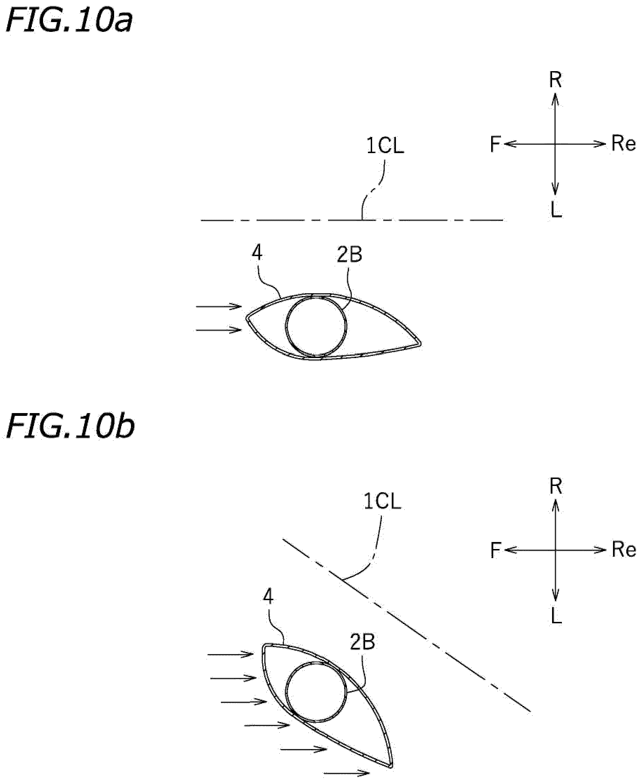

Note that when the entirety of the upper cover 4 has a streamlined shape as shown in FIG. 9c, there is little disturbance of the airflow. In such a case, a significantly straightened airflow is supplied to the radiator 15. In order to enhance the cooling function of the radiator 15, it is preferred that the entirety of the upper cover 4 has a streamlined shape. However, when the entirety of the upper cover 4 has a streamlined shape, the dimension of the upper cover 4 in the vehicle front-rear direction is large. Therefore, the upper cover 4 receives more wind pressure from a diagonal direction. When the rider steers the handle 13 (see FIG. 1), the front fork 12 and the upper cover 4 rotate leftward or rightward. As shown in FIG. 10a, when the motorcycle 10 is running straight, the wind pressure received by the upper cover 4 is small. However, when the dimension of the upper cover 4 in the vehicle front-rear direction is large, the wind pressure received by the upper cover 4 temporarily increases when the upper cover 4 rotates rightward as shown in FIG. 10b, for example. Therefore, before and after the rider rotates the handle 13, the wind pressure received by the upper cover 4 changes relatively significantly. This deteriorates the handling comfort.

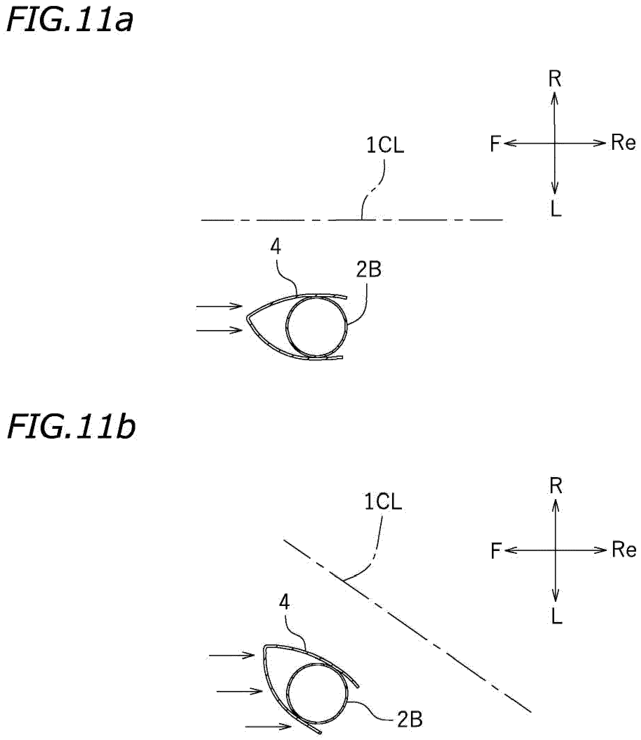

In the present embodiment, however, the upper cover 4 is formed in a shape that is obtained by cutting off a rear portion of a streamlined shape. Therefore, the dimension of the upper cover 4 in the vehicle front-rear direction is smaller than that when the entirety of the upper cover 4 is formed in a streamlined shape. In the present embodiment, the upper cover 4 receives less wind pressure from a diagonal direction. Therefore, as shown in FIG. 11a and FIG. 11b, the difference in the wind pressure received by the upper cover 4 is relatively small between when the motorcycle 10 is running straight and when the upper cover 4 rotates rightward. This suppresses the change in the wind pressure received by the upper cover 4 while the rider rotates the handle 13. Therefore, the upper cover 4 according to the present embodiment suppresses the deterioration of the cooling function of the radiator 15 while ensuring the handling comfort.

This similarly applies also to the lower cover 3, for which the description will be omitted.

The motorcycle 10 according to one embodiment has been described above. Next, various effects realized by the motorcycle 10 of the present embodiment will be described.

The motorcycle 10 according to the present embodiment includes the upper cover 4 and the lower cover 3 covering the suspension 2 of the front fork 12. The upper cover 4 is a separate part from the lower cover 3, and is separate from the lower cover 3. According to the present embodiment, with the provision of two covers (i.e., the upper cover 4 and the lower cover 3) that are separated from each other in the vehicle up-down direction, it is possible to cover a large portion of the suspension 2. Therefore, it is possible to better prevent mud, pebbles, etc., from hitting the suspension 2 than before.

The cross sections of the upper cover 4 and the lower cover 3 are not circular, but are each formed in a shape that is obtained by cutting off a portion of a streamlined shape at a position rearward relative to the axial line 2c of the suspension 2. The upper cover 4 and the lower cover 3 each have a shape that conforms to a streamlined shape and extend to a position rearward relative to the axial line 2c of the suspension 2, and it is therefore possible to sufficiently straighten the airflow from the front side. A sufficiently straightened air is supplied to the radiator 15 and the oil cooler 16. Therefore, it is possible to suppress the deterioration of the cooling function of the radiator 15 and the oil cooler 16.

Since the cross sections of the upper cover 4 and the lower cover 3 are each formed in a shape that is obtained by cutting off a rear portion of a streamlined shape, the dimensions of the upper cover 4 and the lower cover 3 in the vehicle front-rear direction are each smaller as compared with a case where the entirety thereof is formed in a streamlined shape. Therefore, the wind pressure received by the upper cover 4 and the lower cover 3 from a diagonal direction is smaller as compared with a case where the cross sections of the upper cover 4 and the lower cover 3 are each entirely formed in a streamlined shape. It is possible to suppress the change in the wind pressure received by the upper cover 4 and the lower cover 3 while the rider rotates the handle 13. Therefore, the handling comfort is ensured.

Therefore, with the motorcycle 10 according to the present embodiment, it is possible to better prevent mud, pebbles, etc., from hitting the front fork 12 than before, it is possible to desirably supply air to the radiator 15 and the oil cooler 16 arranged rearward of the front fork 12, and it is possible to maintain the handling comfort.

Note that the lower cover rear portion 32 may include only one of the left edge 32L and the right edge 32R (see FIG. 6) or may include both of them (see FIG. 5). If the lower cover rear portion 32 includes both of the left edge 32L and the right edge 32R, it is possible to further improve the air guide function of the lower cover 3.

The motorcycle 10 includes the front fender 5, and the cross section of the front fender 5 perpendicular to the axial line 2c of the suspension 2 has a shape that conforms to a streamlined shape. That is, as shown in FIG. 5 and FIG. 6, the cross section of the front fender 5 includes the fourth left edge 52L extending rearward and leftward from the fourth front edge 52F and the fourth right edge 52R extending rearward and rightward from the fourth front edge 52F, with the dimension L52 in the vehicle front-rear direction being larger than a half of the dimension W52 thereof in the vehicle left-right direction. With the front fender 5, it is possible to prevent mud from being rolled up from the front wheel 1, and it is possible to improve the air guide function for the radiator 15 and the oil cooler 16.

As shown in FIG. 7a and FIG. 7b, the upper end 3t of the lower cover 3 is located upward relative to the upper end 2At of the inner tube 2A, and the lower end 3b is located downward relative to the middle position 2Am of the inner tube 2A in the vehicle up-down direction. The lower cover 3 covers a half or more of the inner tube 2A. Therefore, for a large portion of the inner tube 2A, it is possible to prevent mud, pebbles, etc., from hitting the inner tube 2A.

As shown in FIG. 1, as the vehicle is viewed from the side, the upper end 3t of the lower cover 3 is located upward relative to the rim 1A of the front wheel 1. The lower cover 3 extends to a relatively high position. Therefore, it is possible to effectively prevent mud, pebbles, etc., from hitting the suspension 2.

As shown in FIG. 1, as the vehicle is viewed from the side, a portion of the upper cover 4, a portion of the lower cover 3 and a portion of the tire 1B overlap with each other. According to the present embodiment, it is possible to desirably supply air to the radiator 15 even if the suspension 2 extends/contracts while the motorcycle 10 is running.

In the present embodiment, the lower end portion of the upper cover 4 is arranged inward of the upper end portion of the lower cover 3 (see FIG. 7b). When muddy water is rolled up from the road surface to adhere to the lower cover 3, the muddy water is likely to move along the surface of the lower cover 3 and reach the upper end portion of the lower cover 3 to be then scattered rearward by the wind. Therefore, it is possible to prevent muddy water from entering inside the lower cover 3 and the upper cover 4. Thus, it is possible to suppress adhesion of muddy water to the suspension 2.

According to the present embodiment, as shown in FIG. 2, the upper cover 4 is supported on the inner fender 7, and the lower cover 3 is supported on the inner tube 2A. Therefore, it is possible to desirably support the upper cover 4 and the lower cover 3.

The inner fender 7 includes the horizontal plate-shaped air guide portion 7A, and the upper cover 4 extends downward from the air guide portion 7A. The air guide portion 7A and the left and right upper covers 4 together form a gate-shaped air guide path 17 for guiding airflow rearward. Thus, it is possible to more desirably supply air to the radiator 15.

As shown in FIG. 1, as the vehicle is viewed from the side, a portion of the upper cover 4 and a portion of the cowling 8 overlap with each other. With the upper cover 4 and the cowling 8, it is possible to desirably straighten the airflow from the front side (see reference sign A1 in FIG. 9b). Therefore, it is possible to more desirably supply air to the radiator 15.

As shown in FIG. 8, in a horizontal cross section that passes through the middle position of the upper cover 4 in the vehicle up-down direction, the front end 4f of the upper cover 4 is located forward relative to the front end 8f of the cowling 8. With the upper cover 4 and the cowling 8, it is possible to desirably straighten the airflow from the front side. It is possible to more desirably supply air to the radiator 15.

While one embodiment of the present teaching has been described above, the embodiment is merely an example. Various other embodiments are possible. Next, other example embodiments will be described briefly.

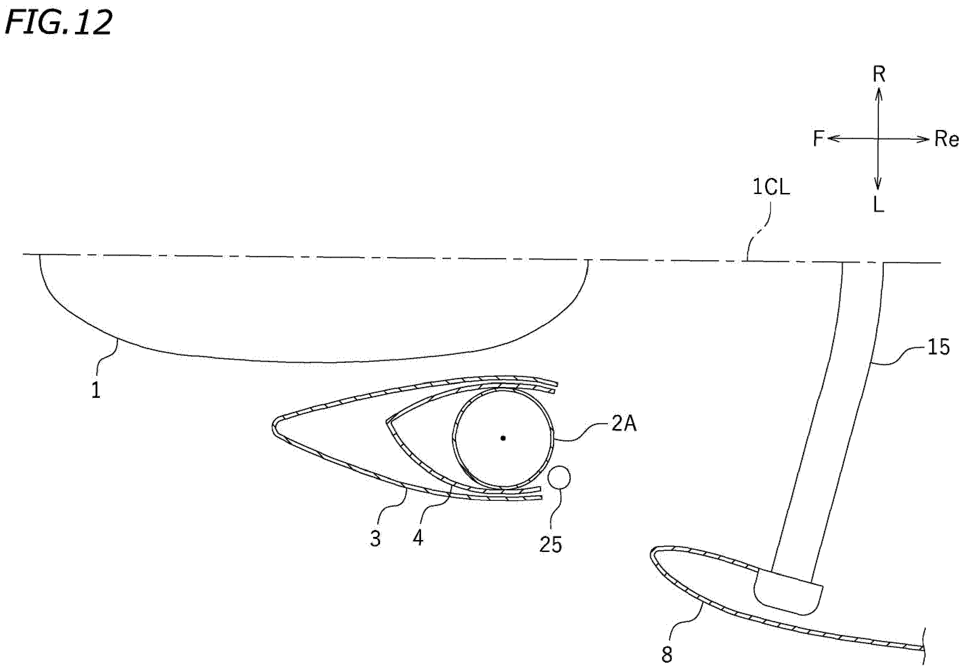

In the embodiment described above, the front fender 5 includes the left vertical portion 52 arranged leftward of the front wheel 1, the right vertical portion 52 arranged rightward of the front wheel 1, and the horizontal portion 51 arranged upward of the front wheel 1. The vertical portion 52 of the front fender 5 and the lower cover 3 are formed as separate parts. Note however that the lower cover 3 does not need to be separate from the front fender 5. The front fender 5 may be integrated with the left lower cover 3 and the right lower cover 3. The lower cover 3 may serve also as a part of the front fender 5. For example, as shown in FIG. 12, the lower cover 3 may form the vertical portion of the front fender 5. The front fender 5 may include the left lower cover 3 arranged leftward of the front wheel 1, the right lower cover 3 arranged rightward of the front wheel 1, and the horizontal portion 51 arranged upward of the front wheel 1. The lower cover 3 may be an integral part with the horizontal portion 51. As the front fender 5 is integrated with the lower cover 3, it is possible to reduce the number of components.

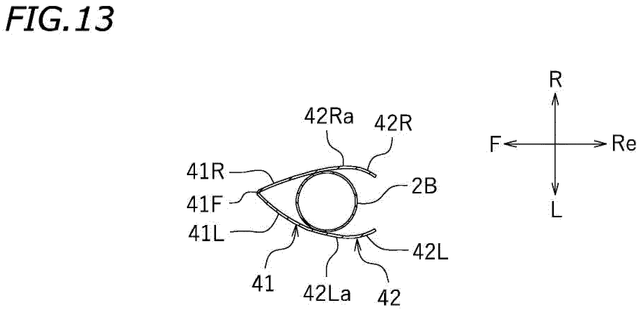

In the embodiment described above, as shown in FIG. 4, the second left edge 42L of the upper cover rear portion 42 extends rearward and rightward from the rear end of the first left edge 41L of the upper cover front portion 41. The second right edge 42R of the upper cover rear portion 42 extends rearward and leftward from the rear end of the first right edge 41R of the upper cover front portion 41. Note however that there is no limitation thereto. For example, as shown in FIG. 13, the upper cover rear portion 42 may include another left edge 42La extending rearward and leftward from the rear end of the first left edge 41L of the upper cover front portion 41, and the second left edge 42L may extend rearward and rightward from the rear end of the other left edge 42La. The upper cover rear portion 42 may include another right edge 42Ra extending rearward and rightward from the rear end of the first right edge 41R of the upper cover front portion 41, and the second right edge 42R may extend rearward and leftward from the rear end of the other right edge 42Ra.

This similarly applies also to the lower cover 3. In the embodiment described above, as shown in FIG. 5, the left edge 32L of the lower cover rear portion 32 extends rearward and rightward from the rear end of the third left edge 31L of the lower cover front portion 31. The third right edge 32R of the lower cover rear portion 32 extends rearward and leftward from the rear end of the third right edge 31R of the lower cover front portion 31. Note however that there is no limitation thereto. For example, the lower cover rear portion 32 may include another left edge extending rearward and leftward from the rear end of the third left edge 31L of the lower cover front portion 31, and the left edge 32L may extend rearward and rightward from the rear end of the other left edge. The lower cover rear portion 32 may include another right edge extending rearward and rightward from the rear end of the third right edge 31R of the lower cover front portion 31, and the right edge 32R may extend rearward and leftward from the rear end of the other right edge.

In the embodiment described above, the front fork 12 is an inverted front fork, and the inner tube 2A is arranged downward of the outer tube 2B. However, the front fork 12 may be a non-inverted front fork. That is, the inner tube 2A may be arranged upward of the outer tube 2B. In such a case, the inner tube 2A is the "upper tube", and the outer tube 2B is the "lower tube".

While the vertical portion 52 of the front fender 5 includes the left edge 52L and the right edge 52R in the embodiment described above, the vertical portion 52 arranged leftward of the front wheel 1 does not need to include the right edge 52R. That is, the vertical portion 52 may only have an edge that is located outward in the vehicle width direction. The front fender 5 may only include the horizontal portion 51 and not include the vertical portion 52.

The upper end 3t of the lower cover 3 may be located downward relative to the upper end of the lower tube (the upper end 2At of the inner tube 2A in the embodiment described above). The lower end 3b of the lower cover 3 may be located upward relative to the middle position of the lower tube in the vehicle up-down direction (the middle position 2Am of the inner tube 2A in the vehicle up-down direction in the embodiment described above).

As the vehicle is viewed from the side, the upper end 3t of the lower cover 3 may be located downward relative to the upper end of the rim 1A of the front wheel 1. As the vehicle is viewed from the side, a portion of the upper cover 4, a portion of the lower cover 3 and a portion of the tire 1B does not need to overlap with each other.

The upper end portion of the lower cover 3 may be arranged inward of the lower end portion of the upper cover 4.

There is no particular limitation on the member for supporting the upper cover 4 and the member for supporting the lower cover 3. The upper cover 4 may be supported on a component other than the inner fender 7. The lower cover 3 may be supported on a component other than the inner tube 2A.

The inner fender 7 may be optional. The inner fender 7 may be absent.

As the vehicle is viewed from the side, the upper cover 4 and the cowling 8 do not need to overlap with each other.

In the embodiment described above, in a horizontal cross section that passes through the middle position of the upper cover 4 in the vehicle up-down direction, the front end 4f of the upper cover 4 is located forward relative to the front end 8f of the cowling 8. However, in another horizontal cross section, the front end 4f of the upper cover 4 may be located forward relative to the front end 8f of the cowling 8. In a horizontal cross section that passes through the middle position of the upper cover 4 in the vehicle up-down direction, the front end 4f of the upper cover 4 does not need to be located forward relative to the front end 8f of the cowling 8. In the horizontal cross section, the front end 4f of the upper cover 4 may be located rearward relative to the front end 8f of the cowling 8. In the horizontal cross section, the rear end 4r of the upper cover 4 may be located forward relative to the front end 8f of the cowling 8. With the motorcycle 10, there may be no need for the cowling 8.

One or both of the radiator 15 and the oil cooler 16 may be absent. Instead of or together with the radiator 15 and the oil cooler 16, other components to be cooled by the airflow may be arranged.

The straddled vehicle is not limited to the motorcycle 10. The straddled vehicle may be an auto tricycle, an ATV (All Terrain Vehicle), or a snowmobile, for example.

### Reference Signs List

1: Front wheel, 1A: Rim, 1B: Tire, 2: Suspension, 2A: Inner tube (lower tube), 2B: Outer tube (upper tube), 3: Lower cover, 4: Upper cover, 5: Front fender, 6: Under bracket, 7: Inner fender, 7A: Air guide portion, 8: Cowling, 10: Motorcycle (straddled vehicle), 12: Front fork, 15: Radiator (vehicle components), 16: Oil cooler (vehicle components), 31: Lower cover front portion, 31 F: Third front edge, 31 L: Third left edge, 31R: Third right edge, 32: Lower cover rear portion, 32L: Edge (left edge), 32R: Another edge (right edge), 41: Upper cover front portion, 41F: First front edge, 41L: First left edge, 41R: First right edge, 42: Upper cover rear portion, 42L: Second left edge, 42R: Second right edge, 51: Horizontal portion, 52: Vertical portion, 52F: Fourth front edge, 52L: Fourth left edge, 52R: Fourth right edge

## Claims

1. A straddled vehicle (10) comprising:
a front wheel (1);
a front fork (12) including a left and a right telescopic suspension (2) having left and right lower tubes (2A) supported on the front wheel (1) and left and right upper tubes (2B) slidable on the left and right lower tubes (2A);
a vehicle component (15, 16) arranged rearward of the front fork (12) with regard to a vehicle front-rear direction;
a lower cover (3) covering at least a part of the lower tubes (2A); and
an upper cover (4) separate from the lower cover (3) and covering at least a part of the upper tubes (2B), wherein:
an upper end (3t) of the lower cover (3) is located upward relative to a lower end (4b) of the upper cover (4) with regard to a vehicle up-down direction;
a cross section of the upper cover (4) perpendicular to an axial line (2c) of the suspension (2) includes an upper cover front portion (41) located forward relative to the axial line (2c) of the suspension (2) and an upper cover rear portion (42) located rearward relative to the axial line (2c) of the suspension (2) with regard to the vehicle front-rear direction;
a cross section of the lower cover (3) perpendicular to the axial line (2c) of the suspension (2) includes a lower cover front portion (31) located forward relative to the axial line (2c) of the suspension (2) and a lower cover rear portion (32) located rearward relative to the axial line (2c) of the suspension (2) with regard to the vehicle front-rear direction;
the upper cover front portion (41) includes a first front edge (41F), a first left edge (41L) extending rearward with regard to the vehicle front-rear direction and leftward with regard to a vehicle left-right direction from the first front edge (41F), and a first right edge (41R) extending rearward with regard to the vehicle front-rear direction and rightward with regard to the vehicle left-right direction from the first front edge (41F);
a dimension (L41) of the upper cover front portion (41) in the vehicle front-rear direction is larger than a half of a dimension (W41) of the upper cover front portion (41) in the vehicle left-right direction;
the upper cover rear portion (42) has a shape of which a rear side with regard to the vehicle front-rear direction is open;
a dimension (L42) of the upper cover rear portion (42) in the vehicle front-rear direction is smaller than the dimension (L41) of the upper cover front portion (41) in the vehicle front-rear direction;
the lower cover front portion (31) includes a third front edge (31F), a third left edge (31L) extending rearward with regard to the vehicle front-rear direction and leftward with regard to the vehicle left-right direction from the third front edge (31F), and a third right edge (31R) extending rearward with regard to the vehicle front-rear direction and rightward with regard to the vehicle left-right direction from the third front edge (31F);
a dimension (L31) of the lower cover front portion (31) in the vehicle front-rear direction is larger than a half of a dimension (W31) of the lower cover front portion (31) in the vehicle left-right direction;
the lower cover rear portion (32) has a shape of which a rear side with regard to the vehicle front-rear direction is open; and
a dimension (L32) of the lower cover rear portion (32) in the vehicle front-rear direction is smaller than the dimension (L31) of the lower cover front portion (31) in the vehicle front-rear direction, wherein the lower cover (3) is constituted by left and right lower covers (3) covering at least a part of the left and right lower tubes (2A), respectively, and the upper cover (4) is constituted by left and right upper covers (4 ) covering at least a part of the left and right upper tubes (2B), respectively, wherein the left upper cover (4) is separate from the left lower cover (3) and the right upper cover (4) is separate from the right lower cover (3).

2. The straddled vehicle (10) according to claim 1, **characterized in that** the upper cover rear portion (42) includes a second left edge (42L) extending rearward with regard to the vehicle front-rear direction and rightward with regard to the vehicle left-right direction, and a second right edge (42R) located rightward with regard to the vehicle left-right direction of the second left edge (42L) and extending rearward with regard to the vehicle front-rear direction and leftward with regard to the vehicle left-right direction.

3. The straddled vehicle (10) according to claim 1 or 2, **characterized in that** the lower cover rear portion (32) includes an edge (32L) extending rearward with regard to the vehicle front-rear direction and inward in the vehicle width direction from a position that is outward in a vehicle width direction relative to the lower tube (2A).

4. The straddled vehicle (10) according to claim 3, **characterized in that** the lower cover rear portion (32) includes another edge (32R) extending rearward with regard to the vehicle front-rear direction and outward in the vehicle width direction from a position that is inward in the vehicle width direction relative to the lower tube (2A).

5. The straddled vehicle (10) according to any one of claims 1 to 4, **characterized by** a front fender (5) including a horizontal portion (51) arranged upward of the front wheel (1) with regard to the vehicle up-down direction, and a vertical portion (52) that extends downward from the horizontal portion (51) with regard to the vehicle up-down direction and is arranged sideward of the front wheel (1) with regard to the vehicle left-right direction, wherein:
the lower cover (3) is arranged rearward of the vertical portion (52) of the front fender (5) with regard to the vehicle front-rear direction; and
a cross section of the vertical portion (52) of the front fender (5) perpendicular to the axial line (2c) of the suspension (2) includes a fourth front edge (52F), a fourth left edge (52L) extending rearward with regard to the vehicle front-rear direction and leftward with regard to the vehicle left-right direction from the fourth front edge (52F) and a fourth right edge (52R) extending rearward with regard to the vehicle front-rear direction and rightward with regard to the vehicle left-right direction from the fourth front edge (52F), wherein a dimension (L52) of the vertical portion (52) in the vehicle front-rear direction is larger than a half of a dimension (W52) thereof in the vehicle left-right direction.

6. The straddled vehicle (10) according to any one of claims 1 to 4, **characterized by** a front fender that is arranged upward of the front wheel (1) with regard to the vehicle up-down direction and integrated with the left lower cover (3) and the right lower cover (3).

7. The straddled vehicle (10) according to any one of claims 1 to 6, **characterized in that:**
an upper end (3t) of the lower cover (3) is located upward relative to an upper end (2At) of the lower tube (2A) with regard to the vehicle up-down direction; and
a lower end (3b) of the lower cover (3) is located downward relative to a middle position (2Am) of the lower tube (2A) with regard to the vehicle up-down direction.

8. The straddled vehicle (10) according to any one of claims 1 to 7, **characterized in that:**
the front wheel (1) includes a rim (1A) and a tire (1B) attached to the rim (1A); and
the upper end (3t) of the lower cover (3) is located upward relative to the rim (1A) with regard to the vehicle up-down direction as the vehicle is viewed from the side.

9. The straddled vehicle (10) according to claim 8, **characterized in that:**
an upper end of the tire (1B) is located downward relative to an upper end of the vehicle component (15) and upward relative to a lower end of the vehicle component (15) with regard to the vehicle up-down direction; and
a portion of the upper cover (4), a portion of the lower cover (3) and a portion of the tire (1B) overlap with each other as the vehicle is viewed from the side.

10. The straddled vehicle (10) according to any one of claims 1 to 9, **characterized in that:**
the upper tube (2B) is a cylindrical outer tube and the lower tube (2A) is an inner tube slidably inserted into the outer tube (2B); and/or
a lower end portion of the upper cover (4) is arranged on an inner side of an upper end portion of the lower cover (3).

11. The straddled vehicle (10) according to any one of claims 1 to 10, **characterized by:**
an under bracket (6) secured to the upper tube (2B) of the left suspension (2) and the upper tube (2B) of the right suspension (2); and
an inner fender (7) secured to the under bracket (6), wherein:
the upper cover (4) is supported on the inner fender (7); and
the lower cover (3) is supported on the lower tube (2A).

12. The straddled vehicle (10) according to any one of claim 11, **characterized in that:**
the inner fender (7) includes a horizontal plate-shaped air guide portion (7A) arranged downward of the under bracket (6) with regard to the vehicle up-down direction; and
the upper cover (4) extends downward from the air guide portion (7A) with regard to the vehicle up-down direction.

13. The straddled vehicle (10) according to any one of claims 1 to 12, **characterized by** a cowling (8) at least a part of which is arranged outward in a vehicle width direction relative to the upper cover (4),
wherein a portion of the upper cover (4) and a portion of the cowling (8) overlap with each other as the vehicle is viewed from the side.

14. The straddled vehicle (10) according to claim 13, **characterized in that**
in a predetermined horizontal cross section that passes through the upper cover (4), a front end (4f) of the upper cover (4) is located forward relative to a front end of the cowling (8) with regard to the vehicle front-rear direction; and/or
in a predetermined horizontal cross section that passes through the upper cover (4), a front end (4f) of the upper cover (4) is located forward relative to a front end (8f) of the cowling (8) with regard to the vehicle front-rear direction, and a rear end (4r) of the upper cover (4) is located rearward relative to the front end (8f) of the cowling (8) with regard to the vehicle front-rear direction.

15. The straddled vehicle (10) according to any one of claims 1 to 14, **characterized in that:**
the dimension (L41) of the upper cover front portion (41) in the vehicle front-rear direction is equal to or greater than the dimension (W41) of the upper cover front portion (41) in the vehicle left-right direction; and/or
the dimension (L31) of the lower cover front portion (31) in the vehicle front-rear direction is equal to or greater than the dimension (W31) of the lower cover front portion (31) in the vehicle left-right direction; and/or
the dimension (L42) of the upper cover rear portion (42) in the vehicle front-rear direction is 1/4 to 3/4 times a dimension (W42) of the upper cover rear portion (42) in the vehicle left-right direction; and/or
the dimension (L32) of the lower cover rear portion (32) in the vehicle front-rear direction is 1/4 to 3/4 times a dimension (W32) of the lower cover rear portion (32) in the vehicle left-right direction; and/or
the vehicle component is a radiator (15) or an oil cooler (16).

## Patentansprüche

1. Ein Spreiz-Sitz-Fahrzeug (10), das umfasst:
ein Vorderrad (1);
eine Vordergabel (12) mit einer linken und einer rechten teleskopischen Aufhängung (2), die linke und rechte untere Rohre (2A), die an dem Vorderrad (1) gelagert sind, und linke und rechte obere Rohre (2B), die an den linken und rechten unteren Rohren (2A) verschiebbar sind, haben;
ein Fahrzeugbauteil (15, 16), das in Bezug auf eine Fahrzeug-Vorder-Rück-Richtung hinter der Vordergabel (12) angeordnet ist;
eine untere Abdeckung (3), die zumindest einen Teil der unteren Rohre (2A) abdeckt; und
eine obere Abdeckung (4), die von der unteren Abdeckung (3) getrennt ist und zumindest einen Teil der oberen Rohre (2B) abdeckt, wobei:
ein oberes Ende (3t) der unteren Abdeckung (3) in Bezug auf ein unteres Ende (4b) der oberen Abdeckung (4) in Bezug auf eine Fahrzeug-Auf-Ab-Richtung oberhalb angeordnet ist;
ein Querschnitt der oberen Abdeckung (4) senkrecht zu einer axialen Linie (2c) der Aufhängung (2) einen Obere-Abdeckung-Vorder-Abschnitt (41), der relativ zu der axialen Linie (2c) der Aufhängung (2) nach vorne angeordnet ist, und einen Obere-Abdeckung-Rück-Abschnitt (42), der relativ zu der axialen Linie (2c) der Aufhängung (2) in Bezug auf die Fahrzeug-Vorder-Rück-Richtung nach hinten angeordnet ist, beinhaltet;
ein Querschnitt der unteren Abdeckung (3) senkrecht zur Axiallinie (2c) der Aufhängung (2) einen Untere-Abdeckung-Vorder-Abschnitt (31), der relativ zu der axialen Linie (2c) der Aufhängung (2) nach vorne angeordnet ist, und einen Untere-Abdeckung-Rück-Abschnitt (32), der relativ zur Axiallinie (2c) der Aufhängung (2) in Bezug auf die Fahrzeug-Vorder-Rück-Richtung nach hinten angeordnet ist, beinhaltet;
der Obere-Abdeckung-Vorder-Abschnitt (41) eine erste Vorderkante (41F), eine erste linke Kante (41L), die sich von der ersten Vorderkante (41F) in Bezug auf die Fahrzeug-Vorder-Rück-Richtung nach hinten und in Bezug auf eine Fahrzeug-Links-Rechts-Richtung nach links erstreckt, und eine erste rechte Kante (41R), die sich von der ersten Vorderkante (41F) in Bezug auf die Fahrzeug-Vorder-Rück-Richtung nach hinten und in Bezug auf die Fahrzeug-Links-Rechts-Richtung nach rechts erstreckt, beinhaltet;
eine Abmessung (L41) des Obere-Abdeckung-Vorder-Abschnitts (41) in der Fahrzeug-Vorder-Rück-Richtung größer ist als die Hälfte einer Abmessung (W41) des Obere-Abdeckung-Vorder-Abschnitts (41) in der Fahrzeug-Links-Rechts-Richtung;
der Obere-Abdeckung-Rück-Abschnitt (42) eine Form hat, bei der eine hintere Seite in Bezug auf die Fahrzeug-Vorder-Rück-Richtung offen ist;
eine Abmessung (L42) des Obere-Abdeckung-Rück-Abschnitts (42) in der Fahrzeug-Vorder-Rück-Richtung kleiner ist als die Abmessung (L41) des Obere-Abdeckung-Vorder-Abschnitts (41) in der Fahrzeug-Vorder-Rück-Richtung;
der Untere-Abdeckung-Vorder-Abschnitt (31) eine dritte vordere Kante (31F), eine dritte linke Kante (31L), die sich von der dritten vorderen Kante (31F) aus nach hinten in Bezug auf die Fahrzeug-Vorder-Rück-Richtung und nach links in Bezug auf die Fahrzeug-Links-Rechts-Richtung erstreckt, und eine dritte rechte Kante (31R), die sich von der dritten vorderen Kante (31F) aus nach hinten in Bezug auf die Fahrzeug-Vorder-Rück-Richtung und nach rechts in Bezug auf die Fahrzeug-Links-Rechts-Richtung erstreckt, beinhaltet;
eine Abmessung (L31) des Untere-Abdeckung-Vorder-Abschnitts (31) in der Fahrzeug-Vorder-Rück-Richtung größer ist als die Hälfte einer Abmessung (W31) des Untere-Abdeckung-Vorder-Abschnitts (31) in der Fahrzeug-Links-Rechts-Richtung;
der Untere-Abdeckung-Rück-Abschnitt (32) eine Form hat, bei der eine hintere Seite in Bezug auf die Fahrzeug-Vorder-Rück-Richtung offen ist; und
eine Abmessung (L32) des Untere-Abdeckung-Rück-Abschnitts (32) in der Fahrzeug-Vorder-Rück-Richtung kleiner ist als die Abmessung (L31) des Untere-Abdeckung-Vorder-Abschnitts (31) in der Fahrzeug-Vorder-Rück-Richtung, wobei die untere Abdeckung (3) durch linke und rechte untere Abdeckungen (3) gebildet wird, die zumindest jeweils einen Teil der linken und rechten unteren Rohre (2A) abdecken, und die obere Abdeckung (4) durch linke und rechte obere Abdeckungen (4) gebildet ist, die zumindest jeweils einen Teil der linken und rechten oberen Rohre (2B) abdecken, wobei die linke obere Abdeckung (4) von der linken unteren Abdeckung (3) getrennt ist und die rechte obere Abdeckung (4) von der rechten unteren Abdeckung (3) getrennt ist.

2. Das Spreiz-Sitz-Fahrzeug (10) gemäß Anspruch 1, **dadurch gekennzeichnet, dass** der Obere-Abdeckung-Rück-Abschnitt (42) eine zweite linke Kante (42L), die sich in Bezug auf die Fahrzeug-Vorder-Rück-Richtung nach hinten und in Bezug auf die Fahrzeug-Links-Rechts-Richtung nach rechts erstreckt, und eine zweite rechte Kante (42R), die in Bezug auf die Fahrzeug-Links-Rechts-Richtung rechts von der zweiten linken Kante (42L) angeordnet ist und sich in Bezug auf die Fahrzeug-Vorder-Rück-Richtung nach hinten und in Bezug auf die Fahrzeug-Links-Rechts-Richtung nach links erstreckt, beinhaltet.

3. Das Spreiz-Sitz-Fahrzeug (10) gemäß Anspruch 1 oder 2, **dadurch gekennzeichnet, dass** der Untere-Abdeckung-Rück-Abschnitt (32) eine Kante (32L) beinhaltet, die sich in Bezug auf die Fahrzeug-Vorder-Rück-Richtung nach hinten und in Fahrzeug-Breiten-Richtung nach innen erstreckt, ausgehend von einer Position, die in Fahrzeug-Breiten-Richtung relativ zu dem unteren Rohr (2A) nach außen liegt.

4. Das Spreiz-Sitz-Fahrzeug (10) gemäß Anspruch 3, **dadurch gekennzeichnet, dass** der Untere-Abdeckung-Rück-Abschnitt (32) eine weitere Kante (32R) beinhaltet, die sich in Bezug auf die Fahrzeug-Vorder-Rück-Richtung nach hinten und in Fahrzeug-Breiten-Richtung nach außen erstreckt, ausgehend von einer Position, die in Bezug auf das untere Rohr (2A) in Fahrzeug-Breiten-Richtung innen liegt.

5. Das Spreiz-Sitz-Fahrzeug (10) gemäß irgendeinem der Ansprüche 1 bis 4, **gekennzeichnet durch** einen vorderen Kotflügel (5), der einen horizontalen Abschnitt (51), der in Bezug auf die Fahrzeug-Auf-Ab-Richtung oberhalb des Vorderrads (1) angeordnet ist, und einen vertikalen Abschnitt (52), der sich in Bezug auf die Fahrzeug-Auf-Ab-Richtung von dem horizontalen Abschnitt (51) nach unten erstreckt und in Bezug auf die Fahrzeug-Links-Rechts-Richtung seitlich von dem Vorderrad (1) angeordnet ist, beinhaltet, wobei:
die untere Abdeckung (3) hinter dem vertikalen Abschnitt (52) des vorderen Kotflügels (5) in Bezug auf die Fahrzeug-Vorder-Rück-Richtung angeordnet ist; und
ein Querschnitt des vertikalen Abschnitts (52) des vorderen Kotflügels (5) senkrecht zur axialen Linie (2c) der Aufhängung (2) eine vierte vordere Kante (52F), eine vierte linke Kante (52L), die sich von der vierten vorderen Kante (52F) in Bezug auf die Fahrzeug-Vorder-Rück-Richtung nach hinten und in Bezug auf die Fahrzeug-Links-Rechts-Richtung nach links erstreckt, und eine vierte rechte Kante (52R), die sich von der vierten vorderen Kante (52F) in Bezug auf die Fahrzeug-Vorder-Rück-Richtung nach hinten und in Bezug auf die Fahrzeug-Links-Rechts-Richtung nach rechts erstreckt, beinhaltet, wobei eine Abmessung (L52) des vertikalen Abschnitts (52) in der Fahrzeug-Vorder-Hinter-Richtung größer ist als die Hälfte einer Abmessung (W52) davon in der Fahrzeug-Links-Rechts-Richtung.

6. Das Spreiz-Sitz-Fahrzeug (10) gemäß irgendeinem der Ansprüche 1 bis 4, **gekennzeichnet durch** einen vorderen Kotflügel, der in Bezug auf die Fahrzeug-Auf-Ab-Richtung oberhalb des Vorderrades (1) angeordnet und mit der linken unteren Abdeckung (3) und der rechten unteren Abdeckung (3) integriert ist.

7. Das Spreiz-Sitz-Fahrzeug (10) gemäß irgendeinem der Ansprüche 1 bis 6, **dadurch gekennzeichnet, dass**:
ein oberes Ende (3t) der unteren Abdeckung (3) relativ zu einem oberen Ende (2At) des unteren Rohrs (2A) in Bezug auf die Fahrzeug-Auf-Ab-Richtung oberhalb angeordnet ist; und
ein unteres Ende (3b) der unteren Abdeckung (3) relativ zu einer mittleren Position (2Am) des unteren Rohrs (2A) in Bezug auf die Fahrzeug-Auf-Ab-Richtung unterhalb angeordnet ist.

8. Das Spreiz-Sitz-Fahrzeug (10) gemäß irgendeinem der Ansprüche 1 bis 7, **dadurch gekennzeichnet, dass**:
das Vorderrad (1) eine Felge (1A) und einen Reifen (1B), der an der Felge (1A) angebracht ist, beinhaltet; und
das obere Ende (3t) der unteren Abdeckung (3) relativ zur Felge (1A) in Bezug auf die Fahrzeug-Auf-Ab-Richtung bei Betrachtung des Fahrzeugs von der Seite oberhalb angeordnet ist.

9. Das Spreiz-Sitz-Fahrzeug (10) gemäß Anspruch 8, **dadurch gekennzeichnet, dass**:
ein oberes Ende des Reifens (1B) in Bezug auf ein oberes Ende des Fahrzeugbauteils (15) unterhalb und in Bezug auf ein unteres Ende des Fahrzeugbauteils (15) oberhalb in Bezug auf die Fahrzeug-Auf-Ab-Richtung angeordnet ist; und
ein Abschnitt der oberen Abdeckung (4), ein Abschnitt der unteren Abdeckung (3) und ein Abschnitt des Reifens (1B) einander überlappen, wenn das Fahrzeug von der Seite betrachtet wird.

10. Das Spreiz-Sitz-Fahrzeug (10) gemäß irgendeinem der Ansprüche 1 bis 9, **dadurch gekennzeichnet, dass**:
das obere Rohr (2B) ein zylindrisches Außenrohr und das untere Rohr (2A) ein Innenrohr ist, das verschiebbar in das Außenrohr (2B) eingesetztes ist; und/oder ein unterer Endabschnitt der oberen Abdeckung (4) an einer Innenseite eines oberen Endabschnitts der unteren Abdeckung (3) angeordnet ist.

11. Das Spreiz-Sitz-Fahrzeug (10) gemäß irgendeinem der Ansprüche 1 bis 10, **gekennzeichnet durch**:
eine untere Halterung (6), die an dem oberen Rohr (2B) der linken Aufhängung (2) und dem oberen Rohr (2B) der rechten Aufhängung (2) gesichert ist; und
einen Innenkotflügel (7), der an der unteren Halterung (6) gesichert ist, wobei:
die obere Abdeckung (4) auf dem Innenkotflügel (7) gelagert ist; und
die untere Abdeckung (3) auf dem unteren Rohr (2A) gelagert ist.

12. Das Spreiz-Sitz-Fahrzeug (10) gemäß irgendeinem der Ansprüche 11, **dadurch gekennzeichnet, dass**:
der Innenkotflügel (7) einen horizontalen, plattenförmigen Luftführungsabschnitt (7A) beinhaltet, der in Bezug auf die Fahrzeug-Auf-Ab-Richtung unterhalb der unteren Halterung (6) angeordnet ist; und
die obere Abdeckung (4) erstreckt sich von dem Luftführungsabschnitt (7A) in Bezug auf die Fahrzeug-Auf-Ab-Richtung nach unten.

13. Das Spreiz-Sitz-Fahrzeug (10) gemäß irgendeinem der Ansprüche 1 bis 12, **gekennzeichnet durch** eine Verkleidung (8), von der zumindest ein Teil in Fahrzeug-Breiten-Richtung relativ zur oberen Abdeckung (4) nach außen angeordnet ist, wobei ein Abschnitt der oberen Abdeckung (4) und ein Abschnitt der Verkleidung (8) einander überlappen, wenn das Fahrzeug von der Seite betrachtet wird.

14. Das Spreiz-Sitz-Fahrzeug (10) gemäß Anspruch 13, **dadurch gekennzeichnet, dass** in einem vorbestimmten horizontalen Querschnitt, der durch die obere Abdeckung (4) verläuft, ein vorderes Ende (4f) der oberen Abdeckung (4) relativ zu einem vorderen Ende der Verkleidung (8) in Bezug auf die Fahrzeug-Vorder-Rück-Richtung vorne angeordnet ist; und/oder
in einem vorbestimmten horizontalen Querschnitt, der durch die obere Abdeckung (4) hindurchgeht, ein vorderes Ende (4f) der oberen Abdeckung (4) relativ zu einem vorderen Ende (8f) der Verkleidung (8) in Bezug auf die Fahrzeug-Vorder-Rück-Richtung vorne angeordnet ist und ein hinteres Ende (4r) der oberen Abdeckung (4) relativ zu dem vorderen Ende (8f) der Verkleidung (8) in Bezug auf die Fahrzeug-Vorder-Rück-Richtung hinten angeordnet ist.

15. Das Spreiz-Sitz-Fahrzeug (10) gemäß irgendeinem der Ansprüche 1 bis 14, **dadurch gekennzeichnet, dass**:
die Abmessung (L41) des Obere-Abdeckung-Vorder-Abschnitts (41) in der Fahrzeug-Vorder-Rück-Richtung gleich oder größer ist als die Abmessung (W41) des Obere-Abdeckung-Vorder-Abschnitts (41) in der Fahrzeug-Links-Rechts-Richtung; und/oder die Abmessung (L31) des Untere-Abdeckung-Vorder-Abschnitts (31) in der Fahrzeug-Vorder-Rück-Richtung gleich oder größer ist als die Abmessung (W31) des Untere-Abdeckung-Vorder-Abschnitts (31) in der Fahrzeug-Links-Rechts-Richtung; und/oder die Abmessung (L42) des Obere-Abdeckung-Rück-Abschnitts (42) in der Fahrzeug-Vorder-Rück-Richtung das 1/4- bis 3/4-fache einer Abmessung (W42) des Obere-Abdeckung-Rück-Abschnitts (42) in der Fahrzeug-Links-Rechts-Richtung ist; und/oder
die Abmessung (L32) des Untere-Abdeckung-Rück-Abschnitts (32) in der Fahrzeug-Vorder-Rück-Richtung 1/4 bis 3/4 mal eine Abmessung (W32) des Untere-Abdeckung-Rück-Abschnitts (32) in der Fahrzeug-Links-Rechts-Richtung ist; und/oder
das Fahrzeugbauteil ist ein Kühler (15) oder ein Ölkühler (16).

## Revendications

1. Véhicule à enfourcher (10) comprenant :
une roue avant (1) ;
une fourche avant (12) comprenant une suspension télescopique gauche et droite (2) avec des tubes inférieurs gauche et droit (2A) supportés par la roue avant (1) et des tubes supérieurs gauche et droit (2B) coulissant sur les tubes inférieurs gauche et droit (2A) ;
un élément du véhicule (15, 16) disposé à l'arrière de la fourche avant (12) par rapport à la direction avant-arrière du véhicule ;
un couvercle inférieur (3) couvrant au moins une partie des tubes inférieurs (2A) ; et
un couvercle supérieur (4) séparé du couvercle inférieur (3) et couvrant au moins une partie des tubes supérieurs (2B), dans lequel :
une extrémité supérieure (3t) du couvercle inférieur (3) est située vers le haut par rapport à une extrémité inférieure (4b) du couvercle supérieur (4) par rapport à la direction haut-bas du véhicule ;
une section transversale du couvercle supérieur (4) perpendiculaire à une ligne axiale (2c) de la suspension (2) comprend une partie avant du couvercle supérieur (41) située vers l'avant par rapport à la ligne axiale (2c) de la suspension (2) et une partie arrière du couvercle supérieur (42) située vers l'arrière par rapport à la ligne axiale (2c) de la suspension (2) en ce qui concerne la direction avant-arrière du véhicule ;
une section transversale du couvercle inférieur (3) perpendiculaire à la ligne axiale (2c) de la suspension (2) comprend une partie avant du couvercle inférieur (31) située vers l'avant par rapport à la ligne axiale (2c) de la suspension (2) et une partie arrière du couvercle inférieur (32) située vers l'arrière par rapport à la ligne axiale (2c) de la suspension (2) en ce qui concerne la direction avant-arrière du véhicule ;
la partie avant du couvercle supérieur (41) comprend un premier bord avant (41F), un premier bord gauche (41L) s'étendant vers l'arrière par rapport à la direction avant-arrière du véhicule et vers la gauche par rapport à la direction gauche-droite du véhicule à partir du premier bord avant (41F), et un premier bord droit (41R) s'étendant vers l'arrière par rapport à la direction avant-arrière du véhicule et vers la droite par rapport à la direction gauche-droite du véhicule à partir du premier bord avant (41F) ;
une dimension (L41) de la partie avant du couvercle supérieur (41) dans la direction avant-arrière du véhicule est supérieure à la moitié d'une dimension (W41) de la partie avant du couvercle supérieur (41) dans la direction gauche-droite du véhicule ;
la partie arrière du couvercle supérieur (42) a une forme dont le côté arrière est ouvert par rapport à la direction avant-arrière du véhicule ;
une dimension (L42) de la partie arrière du couvercle supérieur (42) dans la direction avant-arrière du véhicule est inférieure à la dimension (L41) de la partie avant du couvercle supérieur (41) dans la direction avant-arrière du véhicule ;
la partie avant du couvercle inférieur (31) comprend un troisième bord avant (31F), un troisième bord gauche (31L) s'étendant vers l'arrière par rapport à la direction avant-arrière du véhicule et vers la gauche par rapport à la direction gauche-droite du véhicule à partir du troisième bord avant (31F), et un troisième bord droit (31R) s'étendant vers l'arrière par rapport à la direction avant-arrière du véhicule et vers la droite par rapport à la direction gauche-droite du véhicule à partir du troisième bord avant (31F) ;
une dimension (L31) de la partie avant du couvercle inférieur (31) dans la direction avant-arrière du véhicule est supérieure à la moitié d'une dimension (W31) de la partie avant du couvercle inférieur (31) dans la direction gauche-droite du véhicule ;
la partie arrière du couvercle inférieur (32) a une forme dont un côté arrière par rapport à la direction avant-arrière du véhicule est ouvert ; et
une dimension (L32) de la partie arrière du couvercle inférieur (32) dans la direction avant-arrière du véhicule est inférieure à la dimension (L31) de la partie avant du couvercle inférieur (31) dans la direction avant-arrière du véhicule, dans lequel
le couvercle inférieur (3) est constitué par les couvercles inférieurs gauche et droit (3) couvrant au moins une partie des tubes inférieurs gauche et droit (2A), respectivement, et le couvercle supérieur (4) est constitué par les couvercles supérieurs gauche et droit (4) couvrant au moins une partie des tubes supérieurs gauche et droit (2B), respectivement, le couvercle supérieur gauche (4) étant séparé du couvercle inférieur gauche (3) et le couvercle supérieur droit (4) étant séparé du couvercle inférieur droit (3).

2. Véhicule à enfourcher (10) selon la revendication 1, **caractérisé en ce que** la partie arrière supérieure du couvercle (42) comprend un deuxième bord gauche (42L) s'étendant vers l'arrière par rapport à la direction avant-arrière du véhicule et vers la droite par rapport à la direction gauche-droite du véhicule, et un deuxième bord droit (42R) situé vers la droite par rapport à la direction gauche-droite du véhicule du deuxième bord gauche (42L) et s'étendant vers l'arrière par rapport à la direction avant-arrière du véhicule et vers la gauche par rapport à la direction gauche-droite du véhicule.

3. Véhicule à enfourcher (10) selon les revendications 1 ou 2, **caractérisé en ce que** la partie arrière du couvercle inférieur (32) comprend un bord (32L) s'étendant vers l'arrière par rapport à la direction avant-arrière du véhicule et vers l'intérieur dans la direction de la largeur du véhicule à partir d'une position qui est vers l'extérieur dans la direction de la largeur du véhicule par rapport au tube inférieur (2A).

4. Véhicule à enfourcher (10) selon la revendication 3, **caractérisé en ce que** la partie arrière du couvercle inférieur (32) comprend un autre bord (32R) s'étendant vers l'arrière par rapport à la direction avant-arrière du véhicule et vers l'extérieur dans la direction de la largeur du véhicule à partir d'une position qui est vers l'intérieur dans la direction de la largeur du véhicule par rapport au tube inférieur (2A).

5. Véhicule à enfourcher (10) selon l'une quelconque des revendications 1 à 4, **caractérisé par** une aile avant (5) comprenant une partie horizontale (51) disposée vers le haut de la roue avant (1) par rapport à la direction haut-bas du véhicule, et une partie verticale (52) qui s'étend vers le bas à partir de la partie horizontale (51) par rapport à la direction haut-bas du véhicule et qui est disposée latéralement par rapport à la roue avant (1) par rapport à la direction gauche-droite du véhicule, dans lequel :
le couvercle inférieur (3) est disposé à l'arrière de la partie verticale (52) de l'aile avant (5) par rapport à la direction avant-arrière du véhicule ; et
une section transversale de la partie verticale (52) de l'aile avant (5) perpendiculaire à la ligne axiale (2c) de la suspension (2) comprend un quatrième bord avant (52F), un quatrième bord gauche (52L) s'étendant vers l'arrière par rapport à la direction avant-arrière du véhicule et vers la gauche par rapport à la direction gauche-droite du véhicule à partir du quatrième bord avant (52F) et un quatrième bord droit (52R) s'étendant vers l'arrière par rapport à la direction avant-arrière du véhicule et vers la droite par rapport à la direction gauche-droite du véhicule à partir du quatrième bord avant (52F), dans lequel une dimension (L52) de la partie verticale (52) dans la direction avant-arrière du véhicule est supérieure à la moitié d'une dimension (W52) dans la direction gauche-droite du véhicule.

6. Véhicule à enfourcher (10) selon l'une quelconque des revendications 1 à 4, **caractérisé par** une aile avant qui est disposée vers le haut de la roue avant (1) par rapport à la direction haut-bas du véhicule et intégrée au couvercle inférieur gauche (3) et au couvercle inférieur droit (3).

7. Véhicule à enfourcher (10) selon l'une quelconque des revendications 1 à 6, **caractérisé par le fait que :**
une extrémité supérieure (3t) du couvercle inférieur (3) est située vers le haut par rapport à une extrémité supérieure (2At) du tube inférieur (2A) par rapport à la direction haut-bas du véhicule ; et
une extrémité inférieure (3b) du couvercle inférieur (3) est située vers le bas par rapport à une position médiane (2Am) du tube inférieur (2A) par rapport à la direction haut-bas du véhicule.

8. Véhicule à enfourcher (10) selon l'une quelconque des revendications 1 à 7, **caractérisé par le fait que :**
la roue avant (1) comprend une jante (1A) et un pneu (1B) fixé à la jante (1A) ; et l'extrémité supérieure (3t) du couvercle inférieur (3) est située vers le haut par rapport à la jante (1 A) en ce qui concerne la direction haut-bas du véhicule lorsque le véhicule est vu de côté.

9. Véhicule à enfourcher (10) selon la revendication 8, **caractérisé par le fait que:**
une extrémité supérieure du pneu (1B) est située vers le bas par rapport à une extrémité supérieure de l'élément du véhicule (15) et vers le haut par rapport à une extrémité inférieure de l'élément du véhicule (15) en ce qui concerne la direction haut-bas du véhicule ; et
une partie du couvercle supérieur (4), une partie du couvercle inférieur (3) et une partie du pneu (1B) se chevauchent lorsque le véhicule est vu de côté.

10. Véhicule à enfourcher (10) selon l'une quelconque des revendications 1 à 9, **caractérisé par le fait que :**
le tube supérieur (2B) est un tube extérieur cylindrique et le tube inférieur (2A) est un tube intérieur inséré de manière coulissante dans le tube extérieur (2B); et/ou
une partie d'extrémité inférieure du couvercle supérieur (4) est disposée sur un côté intérieur d'une partie d'extrémité supérieure du couvercle inférieur (3).

11. Véhicule à enfourcher (10) selon l'une des revendications 1 à 10, **caractérisé par :**
un support inférieur (6) fixé au tube supérieur (2B) de la suspension gauche (2) et au tube supérieur (2B) de la suspension droite (2) ; et
une aile intérieure (7) fixée au support inférieur (6), dans lequel :
le couvercle supérieur (4) est supporté par l'aile intérieure (7) ; et
le couvercle inférieur (3) est supporté par le tube inférieur (2A).

12. Véhicule à enfourcher (10) selon l'une quelconque des revendications 11, **caractérisé en ce que :**
l'aile intérieure (7) comprend une partie de guidage d'air en forme de plaque horizontale (7A) disposée vers le bas du support inférieur (6) par rapport à la direction ascendante du véhicule ; et
le couvercle supérieur (4) s'étend vers le bas à partir de la partie de guidage d'air (7A) par rapport à la direction ascendante du véhicule.

13. Véhicule à enfourcher (10) selon l'une quelconque des revendications 1 à 12, **caractérisé par** un capot (8) dont au moins une partie est disposée vers l'extérieur dans le sens de la largeur du véhicule par rapport au couvercle supérieur (4),
dans lequel une partie du couvercle supérieur (4) et une partie du capot (8) se chevauchent l'une l'autre lorsque le véhicule est vu de côté.

14. Véhicule à enfourcher (10) selon la revendication 13, **caractérisé par le fait que**
dans une section horizontale prédéterminée qui traverse le capot supérieur (4), une extrémité avant (4f) du capot supérieur (4) est située vers l'avant par rapport à une extrémité avant du capot (8) par rapport à la direction avant-arrière du véhicule ; et/ou
dans une section horizontale prédéterminée qui traverse le couvercle supérieur (4), une extrémité avant (4f) du couvercle supérieur (4) est située vers l'avant par rapport à une extrémité avant (8f) du capot (8) par rapport à la direction avant-arrière du véhicule, et une extrémité arrière (4r) du couvercle supérieur (4) est située vers l'arrière par rapport à l'extrémité avant (8f) du capot (8) par rapport à la direction avant-arrière du véhicule.

15. Véhicule à enfourcher (10) selon l'une quelconque des revendications 1 à 14, **caractérisé par le fait que :**
la dimension (L41) de la partie avant du couvercle supérieur (41) dans la direction avant-arrière du véhicule est égale ou supérieure à la dimension (W41) de la partie avant du couvercle supérieur (41) dans la direction gauche-droite du véhicule ; et/ou
la dimension (L31) de la partie avant du couvercle inférieur (31) dans la direction avant-arrière du véhicule est égale ou supérieure à la dimension (W31) de la partie avant du couvercle inférieur (31) dans la direction gauche-droite du véhicule ; et/ou
la dimension (L42) de la partie arrière du couvercle supérieur (42) dans la direction avant-arrière du véhicule est 1/4 à 3/4 fois la dimension (W42) de la partie arrière du couvercle supérieur (42) dans la direction gauche-droite du véhicule ; et/ou
la dimension (L32) de la partie arrière du couvercle inférieur (32) dans la direction avant-arrière du véhicule est 1/4 à 3/4 fois la dimension (W32) de la partie arrière du couvercle inférieur (32) dans la direction gauche-droite du véhicule ; et/ou
le composant du véhicule est un radiateur (15) ou un refroidisseur d'huile (16).
